(19)

**Europäisches Patentamt**
**European Patent Office**
**Office européen des brevets**

(11) **EP 4 650 474 A1**

(12) **EUROPEAN PATENT APPLICATION**
published in accordance with Art. 153(4) EPC

(43) Date of publication:
**19.11.2025 Bulletin 2025/47**

(21) Application number: **24741504.5**

(22) Date of filing: **09.01.2024**

(51) International Patent Classification (IPC):
$C22C\ 38/00^{(2006.01)}$     $C21D\ 8/12^{(2006.01)}$
$C22C\ 38/60^{(2006.01)}$     $H01F\ 1/147^{(2006.01)}$
$H01F\ 27/245^{(2006.01)}$

(52) Cooperative Patent Classification (CPC):
**C21D 8/12; C22C 38/00; C22C 38/60; H01F 1/147;
H01F 27/245;** Y02P 10/20

(86) International application number:
**PCT/JP2024/000132**

(87) International publication number:
**WO 2024/150731 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 JP 2023001934**

(71) Applicant: NIPPON STEEL CORPORATION
Chiyoda-ku
**Tokyo 100-8071 (JP)**

(72) Inventors:
• **SUGIURA, Natsuko**
**Tokyo 100-8071 (JP)**
• **MURAKAWA, Tesshu**
**Tokyo 100-8071 (JP)**
• **OTA, Shun**
**Tokyo 100-8071 (JP)**
• **TANAKA, Ichiro**
**Tokyo 100-8071 (JP)**

(74) Representative: **Vossius & Partner
Patentanwälte Rechtsanwälte mbB
Siebertstrasse 3
81675 München (DE)**

(54) **NON-ORIENTED ELECTROMAGNETIC STEEL PLATE, ORIGINAL PLATE FOR
NON-ORIENTED ELECTROMAGNETIC STEEL PLATE, CORE, COLD-ROLLED STEEL PLATE,
METHOD FOR MANUFACTURING NON-ORIENTED ELECTROMAGNETIC STEEL PLATE,
METHOD FOR MANUFACTURING ORIGINAL PLATE FOR NON-ORIENTED
ELECTROMAGNETIC STEEL PLATE, AND METHOD FOR MANUFACTURING COLD-ROLLED
STEEL PLATE**

(57) This non-oriented electromagnetic steel sheet has a predetermined chemical composition, the chemical composition satisfies $1020 - 325 \times [C] + 33 \times [Si] + 287 \times [P] + 80 \times [sol.Al] - 120 \times ([Mn] + [Mo] + [Cu]) - 46 \times ([Cr] + [Ni])$:750 to 1050, A411-011 is 15.0% or more, and the non-oriented electromagnetic steel sheet has a maximum intensity at $\varphi 1 = $ from 0 to 10° when $\varphi 1 = $ from 0 to 90° and $\Phi = 20°$ and has a maximum intensity at $\Phi = $ from 5 to 35° when $\varphi 1 = 0°$ and $\Phi = $ from 0 to 90°, in an ODF at $\varphi 2 = 45°$, in a case in which an area ratio of a crystal grain of an {hkl}<uvw> orientation, with respect to a total field of view, in measurement of a plane in parallel with a rolling plane at a depth of 1/2 of a sheet thickness from a surface with SEM-EBSD is designated as Ahkl-uvw, and an average crystal grain size is from 50 $\mu$m to 150 $\mu$m.

EP 4 650 474 A1

**Description**

Technical Field

The present disclosure relates to a non-oriented electromagnetic steel sheet, an original sheet of a non-oriented electromagnetic steel sheet, a core, a cold-rolled steel sheet, a method of producing a non-oriented electromagnetic steel sheet, a method of producing an original sheet of a non-oriented electromagnetic steel sheet, and a method of producing a cold-rolled steel sheet.

Background Art

Electromagnetic steel sheets are utilized as materials for cores (iron cores) of electric devices. Examples of electric devices include driving motors to be mounted on automobiles, motors for various compressors typified by those for air conditioners or refrigerators, and furthermore domestic or industrial power generators. These electric devices are demanded to be high in energy efficiency, decreased in size, and increased in output. Therefore, electromagnetic steel sheets to be utilized as cores for such electric devices are demanded to be low in iron loss and high in magnetic flux density. Solutions for obtaining low iron loss and a high magnetic flux density include texture control, and there have been heretofore proposed techniques for the development of structures ($\alpha$-fibers) having magnetization easy axes in steel sheet surfaces, being advantageous in terms of enhancements in magnetic characteristics, and being capable of relatively easily increasing accumulation by rolling processing in hot rolling and cold rolling as essential steps for steel sheet production. Specifically, structures are formed in which <110> directions are substantially in parallel with rolling directions (RD).

Patent Literature 1 to 3 each disclose a method of developing a {100}<011> orientation, and describe structure refinement by a decrease in transformation temperature and quenching after hot rolling.

Specifically, Patent Literature 1 describes cooling to 250°C or less at a cooling rate of 200°C/sec or more within 3 seconds after hot rolling, and a cumulative rolling reduction in cold rolling, of 88% or more, achieved by no annealing between hot rolling and cold rolling. The Literature indicates that an electromagnetic steel sheet can be thus produced in which accumulation is achieved in a {100}<011> orientation in a steel sheet surface.

Patent Literature 2 discloses a method of producing an electromagnetic steel sheet containing from 0.6% by mass to 3.0% by mass or less of Al, and describes an electromagnetic steel sheet which can be thus produced in which accumulation is achieved in a {100}<011> orientation in a steel sheet surface by the same process as in the method described in Patent Literature 1.

Patent Literature 3 indicates that the finishing rolling temperature in hot rolling is set to a temperature equal to or more than the $Ac_3$ transformation point and the steel sheet temperature is decreased to 250°C within 3 seconds after hot rolling, or the finishing rolling temperature is set to the Ac3 transformation point - 50°C or less and cooling is performed at a cooling rate equal to or more than that in air cooling. The production method described in Patent Literature 3 involves performing cold rolling twice with intermediate annealing being sandwiched, and the Literature indicates that annealing is not performed between hot rolling and the first cold rolling and the cumulative rolling reduction in the second cold rolling is set to from 5 to 15%. It is also indicated that an electromagnetic steel sheet in which accumulation is achieved in a {100}<011> orientation in a steel sheet surface can be thus produced.

All the methods described in Patent Literature 1 to 3 require immediate quenching in a case in which the finishing rolling temperature in hot rolling is equal to or more than the $Ac_3$ temperature in production of an electromagnetic steel sheet in which accumulation is achieved in a {100}<011> orientation in a steel sheet surface. Such quenching is performed, thereby causing an increase in cooling load after hot rolling. It is preferable in consideration of operation stability that the load of a rolling machine performing cold rolling can be suppressed.

In this regard, techniques for the development of a {411} orientation obtained by the rotation of 20° from a {100} orientation are proposed for enhancements in magnetic characteristics. Patent Literature 4 to 7 each disclose a technique for the development of a {411} orientation, and describe optimization of the grain size in a hot-rolled sheet, or reinforcement of an $\alpha$-fiber in the texture of the hot-rolled sheet.

Specifically, Patent Literature 4 describes cold rolling of a hot-rolled sheet having the degree of accumulation in a {211} orientation higher than the degree of accumulation in a {411} orientation and thus a cumulative rolling reduction in cold rolling of 80% or more. The Literature indicates that an electromagnetic steel sheet in which accumulation is achieved in a {411} orientation in a steel sheet surface can be thus produced.

Patent Literature 5 and 6 describe setting of a slab heating temperature of from 700°C to 1150°C, a finishing rolling initiation temperature of from 650°C to 850°C, a finishing rolling termination temperature of from 550°C to 800°C, and furthermore a cumulative rolling reduction in cold rolling of from 85 to 95%. The Literature indicates that an electromagnetic steel sheet in which accumulation is achieved in a {100} orientation and a {411} orientation in a steel sheet surface can be thus produced.

In this regard, Patent Literature 7 describes a method of producing a non-oriented electromagnetic steel sheet, in which, in a case in which strip casting or the like allows an $\alpha$-fiber to be developed up to the vicinity of a steel sheet surface layer in a steel sheet of a hot-rolled coil, {h11}<1/h12> orientations, in particular, {100}<012> to {411}<148> orientations are recrystallized in subsequent hot-rolled sheet annealing.

Various studies about component systems in which $\gamma \rightarrow \alpha$ phase transformation occurs are performed as recited in Patent Literature 8 to 12, in order to promote development of a {100} crystal orientation increasing magnetic characteristics.

Furthermore, a steel sheet having stress sensitivity and excellent magnetic characteristics in a 45° direction is disclosed in Technical Literature 13.

Citation List

Patent Literature

Patent Literature 1: Japanese Patent Application Laid-Open (JP-A) No. 2017-145462
Patent Literature 2: JP-A No. 2017-193731
Patent Literature 3: JP-A No. 2019-178380
Patent Literature 4: Japanese Patent Publication (JP-B) No. 4218077
Patent Literature 5: JP-B No. 5256916
Patent Literature 6: JP-A No. 2011-111658
Patent Literature 7: JP-A No. 2019-183185
Patent Literature 8: JP-B No. 4029430
Patent Literature 9: JP-B No. 6319465
Patent Literature 10: WO2021/095846
Patent Literature 11: JP-A No. 2021-080501
Patent Literature 12: JP-A No. 2020-100860
Patent Literature 13: WO2021/205880

SUMMARY OF INVENTION

Technical Problem

The present inventors have studied the above techniques, and thus have found that, in a case in which magnetic characteristics are tried to be improved by reinforcing a {100}<011> orientation according to Patent Literature 1 to 3, a problem is that quenching immediately after hot rolling is required and the production load is high. The inventors have further recognized that, in a case in which a steel sheet in which a {100}<011> orientation is reinforced is used as a material of a swaging core, core characteristics to be expected based on the material are not obtained in some cases. The reason for this has been studied, and as a result, it has been considered because a {100}<011> orientation is due to the changes in magnetic characteristics relative to stress, specifically, an increase in degradation of magnetic characteristics (stress sensitivity) in the case of action of compression stress, in particular, an increase in iron loss.

It has also been found that the techniques according to Patent Literature 4 to 7, although develop a {411} orientation, cause weak accumulation in a <011> orientation as an in-plane orientation and do not allow magnetic characteristics in a 45° direction with respect to the rolling direction of the steel sheet, as characteristics of the $\alpha$-fiber, to be sufficiently high. The in-plane orientation not aligned with a <011> orientation, namely, a large misalignment from the $\alpha$-fiber causes inhibition of accumulation in a {411} orientation as a plane orientation, and is considered to serve as the reason for magnetic characteristics not sufficiently enhanced.

One point in Patent Literature 8 to 12 in which studies about component systems in which $\gamma \rightarrow \alpha$ phase transformation occurs have been made for promoting development of a {100} crystal orientation for increasing magnetic characteristics is to refine a hot-rolled structure. Fine grain $\alpha$-phase structures in hot-rolled sheets are realized by setting steel compositions low in $\gamma \rightarrow \alpha$ phase transformation temperature, accumulating a large amount of strain in $\gamma$-phases by hot rolling in low-temperature $\gamma$-regions, and performing transformation therefrom. These structures are realized by use of addition of $\gamma$-stabilized elements such as Mn, Cu, and Ni from the viewpoint of promotion of accumulation of strain by not only a decrease in transformation temperature, but also delaying of recovery and recrystallization.

However, Mn is known as a segregation element, and in the case of being increased in amount of addition thereof, is segregated at the sheet thickness center part of a hot-rolled sheet and causes cracking of the hot-rolled sheet. Cu remarkably reduces hot brittleness. Ni is less problematic in terms of hot processability and rather has the effect of improving hot brittleness reduced due to Cu, but is high in alloy cost and thus is not actively used.

A {100} crystal orientation developed in a technique utilizing $\gamma \rightarrow \alpha$ phase transformation is hardly random in the plane and a {100}<011> orientation is mainly developed, and therefore a reduction in in-plane anisotropy cannot be said to be sufficient and crystal orientation control different from the heretofore one is demanded.

The technique of Patent Literature 13 which discloses a steel sheet having stress sensitivity and excellent magnetic characteristics in a 45° direction essentially involves addition of a $\gamma$-stabilized element such as Mn, Cu, or Ni, and is problematic in terms of hot brittleness and alloy cost.

In view of the above problems, an object of the disclosure is to provide a non-oriented electromagnetic steel sheet which is small in stress sensitivity, in particular, small in deterioration ratio of iron loss due to stress, and which can obtain excellent magnetic characteristics in a 45° direction, a core with the steel sheet, an original sheet of such a non-oriented electromagnetic steel sheet, for production of such a non-oriented electromagnetic steel sheet, a cold-rolled steel sheet, a method of producing a non-oriented electromagnetic steel sheet, a method of producing an original sheet of a non-oriented electromagnetic steel sheet, and a method of producing a cold-rolled steel sheet, provided that a chemical composition is adopted in which the contents of $\gamma$-stabilized elements such as Mn, Cu, and Ni are suppressed so as not to cause hot brittleness and alloy cost to be problematic.

Solution to Problem

The present inventors have made intensive studies in order to solve the above problems. As a result, it has been found that control of the chemical composition, the proportion of a crystal grain of a {411}<011> orientation in a plane in parallel with a rolling plane, and the average crystal grain size is important. It has also been revealed that, in the case of such control, optimization of the grain size after hot rolling and the rolling reduction in cold rolling is suitable. Specifically, it has been revealed that suitable is to allow a crystal grain of a {411}<011> orientation usually hardly developed to be easily developed by allowing $\gamma \rightarrow \alpha$ transformation to occur during hot rolling, optimizing the grain sizes before and after the transformation with rolling under predetermined conditions, furthermore performing cold rolling at a predetermined rolling reduction, controlling the intermediate annealing temperature within a predetermined range, and furthermore performing skin pass rolling (the second cold rolling) at an appropriate rolling reduction and then applying annealing, as premises for a chemical composition of an $\alpha$-$\gamma$ transformation system, in which not only hot processing is ensured with the amount of addition of an austenite stabilization element such as Mn being minimally suppressed, but also the alloy cost is suppressed. The inventors have further made intensive studies based on these findings, and as a result, have conceived various aspects disclosed below.

[1] A non-oriented electromagnetic steel sheet according to one aspect of the disclosure includes, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities,
A411-011 is 15.0% or more and the non-oriented electromagnetic steel sheet has a maximum intensity at $\varphi1 =$ from 0 to 10° when $\varphi1 =$ from 0 to 90° and $\Phi = 20°$ and has a maximum intensity at $\Phi =$ from 5 to 35° when $\varphi1 = 0°$ and $\Phi =$ from 0 to 90°, in an ODF at $\varphi2 = 45°$, in a case in which an area ratio of a crystal grain of an {hkl}<uvw> orientation, with respect to a total field of view, in a measurement of a plane in parallel with a rolling plane at a depth of 1/2 of a sheet thickness from a steel sheet surface with SEM-EBSD is designated as Ahkl-uvw, and
an average crystal grain size is from 50 $\mu$m to 150 $\mu$m.

$$Ar_3\ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1). \tag{1}$$

[2] In the non-oriented electromagnetic steel sheet according to [1], an area ratio of a crystal grain of a specified orientation, with respect to a total field of view, in the measurement of the plane in parallel with a rolling plane at a depth of 1/2 of a sheet thickness from a steel sheet surface with the SEM-EBSD, may satisfy both the following Formula (2)

and Formula (3).

$$A411\text{-}011/A411\text{-}148 \geq 1.1 \dots (2)$$

$$A411\text{-}011/A100\text{-}011 \geq 2.0 \dots (3)$$

[3] In the non-oriented electromagnetic steel sheet according to [1] or [2], one kind or a plurality of kinds selected from Mn, Ni, Co, Pt, Pb, Au, or Cu: less than 2.50% in total, may be adopted.

[4] An original sheet of a non-oriented electromagnetic steel sheet according to another aspect of the disclosure includes, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein:

the original sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities,
an area ratio $A_{s\alpha}$ of a crystal grain of a crystal orientation of $\alpha$-fiber, with respect to a total field of view, in a measurement of a plane in parallel with a rolling plane at a depth of 1/2 of a sheet thickness from a steel sheet surface with SEM-EBSD is 20.0% or more,
an ODF intensity on a {100}<011> orientation in creation of an ODF by measurement with the SEM-EBSD is 15.0 or less, and
in a case in which a number average value of GOS with respect to a total field of view in the measurement with SEM-EBSD is defined as Gs, the Gs is from 0.8 to 3.0.

$Ar_3$ (°C) = 1020 - 325 × [C] + 33 × [Si] + 287 × [P] + 80 × [sol.Al] - 120 × ([Mn] + [Mo] + [Cu]) - 46 × ([Cr] + [Ni]) ... (1).

[5] A core according to another aspect of the disclosure includes the non-oriented electromagnetic steel sheet according to any of [1] to [3].

[6] A core according to another aspect of the disclosure includes the original sheet of a non-oriented electromagnetic steel sheet according to [4].

[7] A cold-rolled steel sheet according to another aspect of the disclosure is a cold-rolled steel sheet to be used for production of the non-oriented electromagnetic steel sheet according to any of [1] to [3] or the original sheet of the of a non-oriented electromagnetic steel sheet according to [4], wherein the non-oriented electromagnetic steel sheet includes

in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities, and
an area ratio $A_{a\alpha}$ of a crystal grain of a crystal orientation of $\alpha$-fiber, with respect to a total field of view, in a measurement of a plane in parallel with a rolling plane at a depth of 1/2 of a sheet thickness from a steel sheet surface with SEM-EBSD, is 15.0% or more:

$Ar_3$ (°C) = 1020 - 325 × [C] + 33 × [Si] + 287 × [P] + 80 × [sol.Al] - 120 × ([Mn] + [Mo] + [Cu]) - 46 × ([Cr] + [Ni]) ... (1).

[8] A method of producing a non-oriented electromagnetic steel sheet according to another aspect of the disclosure has a hot rolling step of performing hot rolling of a steel material containing, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein the steel material has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities, to obtain a hot-rolled steel sheet,

a cooling step of cooling the hot-rolled steel sheet after the hot rolling step,
a cold rolling step of cold rolling the hot-rolled steel sheet after the cooling step, to obtain a cold-rolled steel sheet,
an intermediate annealing step of subjecting the cold-rolled steel sheet to intermediate annealing,
a skin pass rolling step of subjecting the cold-rolled steel sheet after the intermediate annealing step, to skin pass rolling, to obtain an original sheet of a non-oriented electromagnetic steel sheet, and
a finishing annealing step of subjecting the original sheet of a non-oriented electromagnetic steel sheet after the skin pass rolling step, to finishing annealing, wherein
rolling is performed in the hot rolling step such that a rolling initiation temperature is more than the $Ar_3$ temperature + 20°C, a rolling completion temperature is less than the $Ar_3$ temperature, a rolling reduction in a period taken until first passing through the $Ar_3$ temperature backward from a point of time of completion of rolling is 15% or more, and a rolling reduction in a period taken until first passing through the $Ar_3$ temperature + 20°C backward from the point of time of first passing through the $Ar_3$ temperature is 10% or more,
cooling is initiated after a lapse of 0.10 seconds or more from a final pass of finishing rolling, to from 300°C to the $Ar_3$ temperature - 20°C after 3 seconds, in the cooling step,
a rolling reduction in the skin pass rolling step is set to from 5 to 20%, and
an annealing temperature is set to from 750°C to 900°C and an annealing time is set to 2 hours or more in the finishing annealing step.

$$Ar_3 \; (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \; ... \; (1) \tag{1}$$

[9] A method of producing an original sheet of a non-oriented electromagnetic steel sheet according to another aspect of the disclosure has

a hot rolling step of performing hot rolling of a steel material containing, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein the steel material has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities, to obtain a hot-rolled steel sheet,
a cooling step of cooling the hot-rolled steel sheet after the hot rolling step,
a cold rolling step of cold rolling the hot-rolled steel sheet after the cooling step, to obtain a cold-rolled steel sheet,
an intermediate annealing step of subjecting the cold-rolled steel sheet to intermediate annealing, and
a skin pass rolling step of subjecting the cold-rolled steel sheet after the intermediate annealing step, to skin pass rolling, to obtain an original sheet of a non-oriented electromagnetic steel sheet, wherein
rolling is performed in the hot rolling step such that a rolling initiation temperature is more than the $Ar_3$ temperature + 20°C, a rolling completion temperature is less than the $Ar_3$ temperature, a rolling reduction in a period taken until first passing through the $Ar_3$ temperature backward from a point of time of completion of rolling is 15% or more, and a rolling reduction in a period taken until first passing through the $Ar_3$ temperature + 20°C backward from the point of time of first passing through the $Ar_3$ temperature is 10% or more,
cooling is initiated after a lapse of 0.10 seconds or more from a final pass of finishing rolling, to from 300°C to the

Ar$_3$ temperature - 20°C after 3 seconds, in the cooling step, and
a rolling reduction in the skin pass rolling step is set to from 5 to 20%:

$$Ar_3 \ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1). \tag{1}$$

[10] In the method of producing a non-oriented electromagnetic steel sheet according to [8] or the method of producing an original sheet of a non-oriented electromagnetic steel sheet according to [9], the cooling step may be performed such that an average crystal grain size of the hot-rolled steel sheet after the cooling step is from 3 to 10 μm.

[11] In the method of producing a non-oriented electromagnetic steel sheet according to [8] or the method of producing an original sheet of a non-oriented electromagnetic steel sheet according to [9], a rolling reduction in the cold rolling step may be set to from 75 to 95%.

[12] In the method of producing a non-oriented electromagnetic steel sheet according to [8] or the method of producing an original sheet of a non-oriented electromagnetic steel sheet according to [9], an annealing temperature may be set to 900°C or less in the intermediate annealing step.

[13] A method of producing a cold-rolled steel sheet according to another aspect of the disclosure has

a hot rolling step of performing hot rolling of a steel material containing, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein the steel material has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature Ar$_3$ (°C) defined by the following Formula (1) is from 750 to 1050°C and the balance consists of Fe and impurities, to obtain a hot-rolled steel sheet,
a cooling step of cooling the hot-rolled steel sheet after the hot rolling step,
a cold rolling step of cold rolling the hot-rolled steel sheet after the cooling step, to obtain a cold-rolled steel sheet, and
an intermediate annealing step of subjecting the cold-rolled steel sheet to intermediate annealing, wherein rolling is performed in the hot rolling step such that a rolling initiation temperature is more than the Ar$_3$ temperature + 20°C, a rolling completion temperature is less than the Ar$_3$ temperature, a rolling reduction in a period taken until first passing through the Ar$_3$ temperature backward from a point of time of completion of rolling is 15% or more, and a rolling reduction in a period taken until first passing through the Ar$_3$ temperature + 20°C backward from the point of time of first passing through the Ar$_3$ temperature is 10% or more, and
cooling is initiated after a lapse of 0.10 seconds or more from a final pass of finishing rolling, to from 300°C to the Ar$_3$ temperature - 20°C after 3 seconds, in the cooling step:

$$Ar_3 \ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1). \tag{1}$$

[14] In the method of producing a cold-rolled steel sheet according to [12], the cooling step may be performed such that an average crystal grain size of the hot-rolled steel sheet after the cooling step is from 3 to 10 μm.

[15] In the method of producing a cold-rolled steel sheet according to [12] or [13], a rolling reduction in the cold rolling step may be set to from 75 to 95%.

[16] In the method of producing a cold-rolled steel sheet according to [12] or [13], an annealing temperature may be set to 900°C or less in the intermediate annealing step.

Advantageous Effect of Invention

The above aspects of the disclosure can provide a non-oriented electromagnetic steel sheet which is small in stress sensitivity, in particular, small in deterioration ratio of iron loss due to stress, and which has excellent magnetic characteristics in a 45° direction, a core with the steel sheet, an original sheet of such a non-oriented electromagnetic steel sheet, for production of such a non-oriented electromagnetic steel sheet, a cold-rolled steel sheet, a method of producing a non-oriented electromagnetic steel sheet, a method of producing an original sheet of a non-oriented electromagnetic steel sheet, and a method of producing a cold-rolled steel sheet.

DESCRIPTION OF EMBODIMENTS

Hereinafter, a non-oriented electromagnetic steel sheet according to one embodiment of the disclosure (the non-oriented electromagnetic steel sheet according to the embodiment), an original sheet of a non-oriented electromagnetic steel sheet (the original sheet of the non-oriented electromagnetic steel sheet according to the embodiment), a cold-rolled steel sheet (the cold-rolled steel sheet according to the embodiment), and production methods thereof are described in detail.

First, chemical compositions of the non-oriented electromagnetic steel sheet according to the embodiment and a steel material (serving as a material) used in production of the steel sheet are described. In the following description, the expression "%" as the unit of the content of each element included in the non-oriented electromagnetic steel sheet or the steel material means "% by mass", unless particularly noted. A numerical value range expressed with "(from) ... to ..." means a range including numerical values described before and after "to" as the lower limit value and the upper limit value. It is also obvious that each element in embodiments below can be combined. The chemical composition of the non-oriented electromagnetic steel sheet indicates the content under the assumption that a base material excluding a film and the like is 100%.

The upper limit value in a certain numerical value range described stepwise, as a numerical value range described stepwise herein, may be replaced with the upper limit value in any other numerical value range described stepwise, or may be replaced with a value shown in Examples.

The lower limit value in a certain numerical value range described stepwise, as a numerical value range described stepwise herein, may be replaced with the lower limit value in any other numerical value range described stepwise, or may be replaced with a value shown in Examples.

Herein, the "non-oriented electromagnetic steel sheet" and "original sheet of the non-oriented electromagnetic steel sheet" each encompass not only a coil-shaped or cut sheet-shaped steel sheet, but also a steel sheet and an original sheet each processed as a material for a product (member) such as a motor core, into a specified shape, and furthermore a steel sheet and an original sheet that are each processed and then layered, to form a motor core.

The non-oriented electromagnetic steel sheet, the original sheet of the non-oriented electromagnetic steel sheet, and the cold-rolled steel sheet according to the embodiment each have a chemical composition corresponding to a chemical composition (a chemical composition in which a certain amount of $\gamma$ occurs during heating even in a case in which the whole is not transformed to $\gamma$) in which ferrite-austenite transformation (hereinafter, $\alpha$-$\gamma$ transformation) can occur at a certain level, in which the chemical composition contains C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, and furthermore the contents of C, Si, P, sol.Al, Mn, Mo, Cu, Cr and Ni satisfy predetermined conditions described below and the balance consists of Fe and impurities. Examples of such impurities include those included in a raw material such as ore or scrap, or those included during a production process.

The non-oriented electromagnetic steel sheet, the original sheet of the non-oriented electromagnetic steel sheet, and the cold-rolled steel sheet according to the embodiment preferably each contain less than 2.50% in total of one kind or a plurality of kinds selected from Mn, Ni, Co, Pt, Pb, Au, or Cu.

(C: 0.0100% or less)

C is an element which increases iron loss and/or causes magnetic aging due to inhibition of grain growth by precipitation of fine carbide. Accordingly, a lower C content is more preferred. Such a phenomenon is remarkably caused at a C content of more than 0.0100%. Therefore, the C content is set to 0.0100% or less. The C content is preferably 0.0050% or less, more preferably 0.0025% or less. The lower limit of the C content is not particularly limited, and the C content is preferably set to 0.0005% or more in consideration of the cost of a decarburization treatment during refining.

(Si: from 1.50% to 4.00%)

Si is an element which increases the electric resistance, thereby resulting in a decrease in eddy-current loss and a reduction in iron loss, and increases the yield ratio, thereby resulting in an enhancement in punching processability to an iron core. A Si content of less than 1.50% cannot sufficiently provide such effects. Accordingly, the Si content is set to 1.50% or more.

In this regard, a Si content of more than 4.00% causes a decrease in magnetic flux density, and an excess increase in hardness and thus a decrease in punching processability, and makes cold rolling difficult. Accordingly, the Si content is set to 4.00% or less.

(Sol.Al: from 0.0001% to 1.00%)

Sol.Al is an element which increases the electric resistance, thereby resulting in a decrease in eddy-current loss and a reduction in iron loss. Sol.Al is also an element which contributes to an enhancement in relative magnitude of the magnetic flux density B50 to the saturated magnetic flux density. The magnetic flux density B50 here means a magnetic flux density in a magnetic field at 5000 A/m. A sol.Al content of less than 0.0001% cannot sufficiently provide such effects. Al has also a desulfurization promotion effect in steelmaking. Accordingly, the sol.Al content is set to 0.0001% or more.
In this regard, a sol.Al content of more than 1.00% leads to a decrease in magnetic flux density. Accordingly, the sol.Al content is set to 1.00% or less.
Herein, sol.Al means acid-soluble Al which is not in the form of an oxide such as $Al_2O_3$ and which is soluble in an acid.

(S: 0.0100% or less)

S is not an essential element, and for example, is contained as an impurity in steel. S is precipitated as fine MnS, and inhibits recrystallization and crystal grain growth in annealing. Accordingly, a lower S content is more preferred. Such increase in iron loss and decrease in magnetic flux density due to inhibition of recrystallization and crystal grain growth remarkably occur at a S content of more than 0.0100%. Thus, the S content is set to 0.0100% or less. The lower limit of the S content is not particularly limited, and the S content is preferably set to 0.0003% or more in consideration of the cost of a desulfurization treatment in refining.

(N: 0.0100% or less)

N degrades magnetic characteristics through formation of a fine precipitate of TiN, AlN, or the like. Therefore, a lower N content is more preferred. Such degradation of magnetic characteristics remarkably occurs at a N content of more than 0.0100%, and therefore the N content is set to 0.0100% or less. The lower limit of the N content is not particularly limited, and the N content is preferably set to 0.0010% or more in consideration of the cost of a denitrification treatment in refining.

(One Kind or Plurality of Kinds Selected from the group consisting of Mn, Ni and Cu: less than 2.5% in Total)

These elements, although effective for generation of $\alpha$-$\gamma$ transformation, deteriorate hot processability and increase the alloy cost, and therefore the total content of these elements needs to be less than 2.5%.
A total content of 2.5% or more may cause a decrease in magnetic flux density. In this regard, these elements are effective for a decrease in iron loss and therefore 1.5% or more in total thereof are preferably contained. In particular, Ni is known to have the effect of suppressing a decrease in hot brittleness due to Cu, and therefore, preferably, the total content of one or more selected from Mn, Ni or Cu is in the range of less than 2.5% and corresponds to a content equal to or less than about 1/2 of the Cu content, in terms of hot brittleness.
Mn lowers the $Ar_3$ transformation point and can allow for refinement of a crystal grain in a hot-rolled sheet due to phase transformation in a component system of the non-oriented electromagnetic steel sheet according to the embodiment. Mn is an element which increases the electric resistance of steel and reduces iron loss. Therefore, 0.10% or more of Mn is contained. From this viewpoint, more preferably 0.50% or more, still more preferably 1.00% or more of Mn is contained. In this regard, Mn is an element which is easily segregated, and in the case of being increased in content, not only causes cracking in cold-processing, due to segregation, but also decreases the saturated magnetic flux density and prevents the steel sheet from being increased in magnetic flux density. MnS is also excessively produced, thereby resulting in a decrease in cold processability. Therefore, the upper limit of the Mn content is restricted to less than 2.5%. A specific upper limit of the Mn content is preferably 2.3% by mass or less, more preferably 2.0% by mass or less.
The upper limit of the Cu content is not limited, and is preferably 1.5% by mass or less, more preferably 1.0% by mass or less. The lower limit of the Cu content is not particularly limited, and may be set to, for example, 0.01% or more. The upper limit of the Ni content is preferably 1.0% by mass or less, more preferably 0.7% by mass or less. The lower limit of the Ni content is not particularly limited, and may be 0% or may be set to, for example, 0.01% or more.
The total of the contents of one or more selected from Mn, Ni, or Cu is preferably 2.45% or less, more preferably 2.40% or less. The lower limit value of the total of Mn, Ni, and Cu is not particularly limited, and, for example, may be set to 0.10% or more, may be set to 0.50% or more, or 1.00% or more, or furthermore may also be set to 2.00% or more.

(One Kind or Plurality of Kinds Selected from Mn, Ni, Co, Pt, Pb, Au, or Cu: less than 2.50% in Total)

Since not only Mn, Ni, and Cu described above, but also Co, Pt, Pb, and Au decrease hot processability and increase the alloy cost, the content in total of these elements is preferably less than 2.50% in the embodiment. These elements also lead to a decrease in magnetic flux density, and therefore the total thereof is preferably set to less than 2.00%. The lower limit of the total of Mn, Ni, Co, Pt, Pb, Au, and Cu is not particularly limited, and, for example, may be set to 0.10% or more, may be set to 0.50% or more, or 1.00% or more, or furthermore may also be set to 2.00% or more. In particular, Co, Pt, Pb, and Au are expensive in terms of the alloy cost and thus are to be avoided from being actively added. Also in consideration of control of the $Ar_3$ transformation point as one feature of the embodiment, the $Ar_3$ transformation point is preferably controlled by inclusion of Mn, Ni, and Cu. Therefore, the total of Co, Pt, Pb, and Au is less than 0.5%, still more preferably 0.1% or less, and furthermore these elements are suppressed within inevitable elements incorporated and are not needed to be actively added (the total may also be set to 0%).

The following conditions are further required to be satisfied as conditions allowing for the occurrence of $\alpha$-$\gamma$ transformation and providing favorable magnetic characteristics. In other words, in a case in which, in percentage by mass, the C content is [C], the Mo content is [Mo], the Cr content is [Cr], the Mn content is [Mn], the Ni content is [Ni], the Cu content is [Cu], the Si content is [Si], the sol.Al content is [sol.Al], and the P content is [P], the transformation temperature $Ar_3$ (°C) defined by the following Formula (1) satisfies from 750 to 1050°C.

$$Ar_3 \text{ (°C)} = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \text{ ... (1)} \tag{1}$$

In a case in which the above Formula (1) is not satisfied, the transformation point is not in an appropriate temperature range even in the case of the occurrence of $\alpha$-$\gamma$ transformation and therefore a sufficient magnetic flux density cannot be obtained even by application of a production method described below. An $Ar_3$ of less than 750°C lowers the temperature in hot rolling, thereby resulting in not only an increase in deformation resistance and a too large load on a rolling machine, but also an increase in amount of an element added, thereby causing a hot-rolled sheet and a cold-rolled sheet to be decreased in toughness, and therefore this value is defined as the lower limit. In this regard, an $Ar_3$ of more than 1050°C excessively increases the temperature in hot rolling, thereby resulting in a need for heating at an extremely high temperature and thus an increase load on a heating furnace, or resulting in a component system in which $\gamma \rightarrow \alpha$ transformation does not occur, and therefore this value is defined as the upper limit.

(Mo: from 0.0% to less than 2.5%)

Mo is an element which can lower the $Ar_3$ transformation point, to allow for refinement of the grain size in a hot-rolled sheet due to phase transformation, in the chemical composition of the non-oriented electromagnetic steel sheet according to the embodiment. Accordingly, Mo may be, if necessary, contained, and is preferably contained at 0.1% or more. In this regard, Mo contained at 2.5% or more remarkably decreases cold processability, whereby the Mo content is set to less than 2.5%.

(Cr: from 0.0% to less than 2.5%)

Cr not only is an element which can lower the $Ar_3$ transformation point, to allow for refinement of the grain size in a hot-rolled sheet due to phase transformation, in the chemical composition of the non-oriented electromagnetic steel sheet according to the embodiment, but also has the effect of not only intensity adjustment, but also enhancements in high-frequency characteristics, in addition to corrosion resistance. Accordingly, Cr may be, if necessary, contained, and is preferably contained at 0.1% or more. In this regard, Cr excessively contained not only causes the effect to be saturated, thereby resulting in an increase in raw material cost, but also decreases the saturated magnetic flux density, thereby preventing the steel sheet from being increased in magnetic flux density. Therefore, the Cr content is set to less than 2.5%.

(Ti: from 0% to 0.005%)

Ti is present as a solid solution or TiN, thereby allowing recrystallization to be suppressed and contributing to refinement of the austenite grain size. Accordingly, Ti may be contained. In a case in which Ti is contained, Ti is preferably contained at 0.001% or more. In this regard, a Ti content of more than 0.005% causes production of various precipitates such as TiN, TiS, and TiC, and degrades iron loss characteristics, whereby the Ti content is set to 0.005% or less.

(Nb: from 0% to 0.005%)

Nb is present as a solid solution or NbN, thereby allowing recrystallization to be suppressed and contributing to refinement of the austenite grain size. Accordingly, Nb may be contained. In a case in which Nb is

preferably contained at 0.001% or more. In this regard, a Nb content of more than 0.005% causes production of various precipitates such as NbN and NbC and degrades iron loss characteristics, whereby the Nb content is set to 0.005% or less.

(Sn: from 0% to 0.40%, Sb: from 0% to 0.40%)

Sn and Sb improve a texture after cold rolling and recrystallization and enhance the magnetic flux density. Therefore, these elements may be, if necessary, contained. In a case in which further effects such as magnetic characteristics are imparted, one or more selected from the group consisting of 0.02% to 0.40% of Sn and 0.02% to 0.40% of Sb are preferably contained.
These elements may be excessively contained, to cause embrittlement of steel. Accordingly, the Sn content and the Sb content are each set to 0.40% or less.

(P: from 0% to 0.400%)

P is an element effective for ensuring the hardness of the steel sheet after recrystallization. P is also an element having a suitable influence on magnetic characteristics. Therefore, P may be contained, and in a case in which these effects are to be obtained, the P content is preferably 0.020% or more.
In this regard, in a case in which P is excessively contained, steel is embrittled. Accordingly, the P content is set to 0.400% or less.

(One or more selected from the group consisting of Mg, Ca, Sr, Ba, Ce, La, Nd, Pr, Zn, and Cd: from 0% to 0.010% in Total)

Mg, Ca, Sr, Ba, Ce, La, Nd, Pr, Zn, and Cd are reacted with S in molten steel during casting of the molten steel, to produce a precipitate of sulfide or oxysulfide, or both thereof. Hereinafter, Mg, Ca, Sr, Ba, Ce, La, Nd, Pr, Zn, and Cd may be collectively referred to as "coarse precipitate-production element". The grain size of a precipitate of the coarse precipitate-production element is from about 1 $\mu$m to 2 $\mu$m, and is much larger than the grain size (about 100 nm) of a fine precipitate of MnS, TiN, AlN, TiC, NbC, or the like. Therefore, such a fine precipitate is attached to the precipitate of the coarse precipitate-production element, and hardly inhibits recrystallization and crystal grain growth in annealing such as intermediate annealing. In order to sufficiently obtain these effects, the total of these elements is preferably 0.0005% or more, more preferably 0.001% or more.
In this regard, in a case in which the total of these elements exceeds 0.010%, the total amount of sulfide or oxysulfide, or both thereof is excess, and recrystallization and crystal grain growth in annealing such as intermediate annealing are inhibited. Accordingly, the total content of the coarse precipitate-production element is set to 0.010% or less.
In the embodiment, the balance other than the above in the chemical composition may be Fe and impurities. The impurities mean any steel raw material and/or any element incorporated in the course of steelmaking. Any other element may be further contained instead of some Fe as long as the effects of the disclosure are not lost. For example, 0.10% or less of each of B, O, V, Bi, W, and Y may be contained. The total of the whole impurities is preferably 5.00% or less, more preferably 1.00% or less.
The chemical composition is determined by the following method.
The chemical composition may be measured by a common analysis method of steel. For example, the chemical composition may be measured with ICP-AES (Inductively Coupled Plasma-Atomic Emission Spectrometry). Specifically, the chemical composition is identified by measurement of a test piece collected from the steel sheet with a predetermined measurement apparatus under conditions based on the calibration made in advance. C and S may be measured with a combustion infrared absorption method, and N may be measured with an inert gas fusion-thermal conductivity method. O may be measured with an inert gas fusion-nondispersive infrared absorption method.
In a case in which an insulation film is present on a surface, the film may be mechanically removed by a minitor or the like and then the resultant may be subjected to analysis.
Next, the texture in the non-oriented electromagnetic steel sheet according to the embodiment is described.
First, the method of measuring the area ratio of a specified oriented grain in the non-oriented electromagnetic steel sheet according to the embodiment is described. The area ratio of such a specified oriented grain is determined by using OIM Analysis 7.3 (manufactured by TSL) and extracting an objective specified orientation (the tolerance is set to 10°, hereinafter, designated as a tolerance within 10°) from a measurement region observed in the following measurement conditions, by a scanning electron microscope (SEM) equipped with electron back scattering diffraction (EBSD). The area extracted is divided by the area of the measurement region, to determine a percentage. This percentage is defined as the area ratio of such a specified oriented grain. Hereinafter, a tolerance within 10° is assumed in the description of a crystal orientation. In other words, a crystal orientation is assumed to have a tolerance within $\pm 5°$.
The details of measurement conditions determining the area ratio of each oriented grain are as follows.

· Measurement apparatus: using SEM, Model No. "JSM-6400 (manufactured by JEOL Ltd.)", and EBSD detector, Model No. "HIKARI (manufactured by TSL)"
· Step interval: 0.3 $\mu$m (after intermediate annealing, after skin pass rolling), or 5.0 $\mu$m (after finishing annealing)
· Magnification: 1000x (after intermediate annealing, after skin pass rolling), or 100x (after finishing annealing)
· Measurement object: plane in parallel with rolling plane at depth of 1/2 of sheet thickness from surface
· Measurement region: rectangular region of 1000 $\mu$m or more × 1000 $\mu$m or more

In the non-oriented electromagnetic steel sheet according to the embodiment, the {411}<011> ratio (A411-011 in a case in which the area ratio of a crystal grain of an {hkl}<uvw> orientation (a tolerance within 10°), with respect to the total field of view, is designated as Ahkl-uvw) in measurement of the steel sheet surface (in a case in which the surface has an insulation film, the steel sheet surface excluding the insulation film is meant, the same applies to the following) with a scanning electron microscope equipped with electron back scattering diffraction (SEM-EBSD) according to the above procedure is set to 15.0% or more. In a case in which the {411}<011> ratio is less than 15.0%, excellent magnetic characteristics cannot be obtained. Accordingly, the {411}<011> ratio is set to 15.0% or more, preferably 25.0% or more. The upper limit is not particularly limited, and is set to, for example, 60% or less.

The non-oriented electromagnetic steel sheet according to the embodiment has a maximum intensity at $\varphi1$ = from 0 to 10° when $\varphi1$ = from 0 to 90° and $\Phi$ = 20° and a maximum intensity at $\Phi$ = from 5 to 35° when $\varphi1$ = 0° and $\Phi$ = from 0 to 90°, in an ODF at $\varphi2$ = 45° in measurement of the surface with SEM-EBSD.

The non-oriented electromagnetic steel sheet having a maximum intensity at $\varphi1$ = from 0 to 10° when $\varphi1$ = from 0 to 90° and $\Phi$ = 20° is synonymous with the non-oriented electromagnetic steel sheet having a maximum intensity in the vicinity of a {411}<011> orientation in {411} <uvw> orientations. The {411}<011> orientation is more excellent than any other orientation in the {411}<uvw> orientations, such as {411}<148>, in terms of magnetic characteristics in a 45° direction. It is more preferable to have a maximum intensity at $\varphi1$ = from 0 to 5° when $\varphi1$ = from 0 to 90° and $\Phi$ = 20°.

In this regard, the non-oriented electromagnetic steel sheet having a maximum intensity at $\Phi$ = from 5 to 35° when $\varphi1$ = 0° and $\Phi$ = from 0 to 90° in measurement of the surface with SEM-EBSD is synonymous with the non-oriented electromagnetic steel sheet having a maximum intensity in the vicinity of a {411}<011> orientation in {hkl}<011> orientations. The {411}<011> orientation is excellent in terms of magnetic characteristics, and is smaller than any other orientation in the {hkl}<011> orientations, such as {100}<011>, in terms of stress sensitivity, and thus causes less degradation of magnetism due to stress occurring due to a swaging core or the like. It is more preferable to have a maximum intensity at $\Phi$ = from 20 to 30° when $\varphi1$ = 0° and $\Phi$ = from 0 to 90°.

The methods of determining the maximum intensity in a specified orientation range and the intensity of a specified orientation (ODF intensity) in the steel sheet are described. An orientation distribution function (ODF) is created in a measurement region by SEM-EBSD in the following conditions by use of OIM Analysis 7.3. The fate of ODF created is output, and the maximum ODF value in a specified orientation range (the range prescribed at angles of $\varphi1$ and $\Phi$) is defined as the maximum intensity. The ODF value of a specified orientation (the orientation prescribed at angles of $\varphi1$ and $\Phi$) is defined as the ODF intensity in the orientation.

The details of creation conditions of ODF are as follows.

· Series Rank(L): 16
· Gaussian Half-Width [degrees]: 5
· Sample Symmetry: Orthotropic (Rolled sheet)
· Bunge Euler Angles: $\varphi1$ = from 0 to 90°, $\varphi2$ = 45°, $\Phi$ = from 0 to 90°

In the non-oriented electromagnetic steel sheet according to the embodiment, the area ratio of a crystal grain having a specified orientation (a tolerance within 10°), with respect to the total field of view (the entire field of view), in measurement with SEM-EBSD, satisfies both the following Formula (2) and Formula (3).

$$A411\text{-}011/A411\text{-}148 \geq 1.1 \ldots (2)$$

$$A411\text{-}011/A100\text{-}011 \geq 2.0 \ldots (3)$$

For Formula (2), a {411}<011> orientation is more excellent than any other orientation in {411}<uvw> orientations, such as {411}<148>, in terms of magnetic characteristics in a 45° direction. Accordingly, the {411}<011> ratio is preferably more than the {411}<148> ratio, and the {411}<011> ratio is more preferably 1.1 times or more the {411}<011> ratio (the ratio of A411-011 to A411-148 is 1.1 or more). The upper limit of the ratio of A411-011 to A411-148 is not limited, and is set to, for example, 50 or less.

For Formula (3), a {411}<011> orientation is lower than a {100}<011> orientation in terms of stress sensitivity in magnetic characteristics, whereby the {411}<011> ratio is preferably more than the {100}<011> ratio and the {411}<011> ratio is more preferably 2.0 times or more the {100}<011> ratio (the ratio of A411-011 to A100-011 is 2.0 or more). The upper limit of the ratio of A 100-011 to A411-011 is not limited, and is set to, for example, 50 or less.

Next, the average crystal grain size in the non-oriented electromagnetic steel sheet according to the embodiment is described. A crystal grain not coarsened and a too small average crystal grain size cause deterioration in iron loss. In this regard, a crystal grain excessively coarsened and a too large average crystal grain size cause not only deterioration in processability, but also deterioration in eddy-current loss. Therefore, the average crystal grain size in the non-oriented electromagnetic steel sheet is set to from 50 $\mu$m to 150 $\mu$m. The method of measuring the grain size is, for example, a cutting method of JIS G0551(2020), in a plane in parallel with a rolling plane at a depth of 1/2 of the sheet thickness from the steel sheet surface.

Next, the steel thickness of the non-oriented electromagnetic steel sheet according to the embodiment is described. The sheet thickness of the non-oriented electromagnetic steel sheet according to the embodiment is not particularly limited. A preferred sheet thickness of the non-oriented electromagnetic steel sheet according to the embodiment is from 0.10 to 0.50 mm. In general, a thinner sheet thickness leads to less iron loss, but a lower magnetic flux density. In view of this, a sheet thickness of 0.10 mm or more leads to less iron loss and a higher magnetic flux density. A more preferred lower limit value of the sheet thickness is 0.12 mm, and a still more preferred lower limit value thereof is 0.14 mm. A sheet thickness of 0.50 mm or less can allow less iron loss to be kept. A more preferred upper limit of the sheet thickness is 0.35 mm, and a still more preferred upper limit thereof is 0.25 mm.

The above non-oriented electromagnetic steel sheet has features of the non-oriented electromagnetic steel sheet produced by performing hot rolling, cooling, cold rolling, intermediate annealing, skin pass rolling, and finishing annealing described below.

Next, features of the original sheet of the non-oriented electromagnetic steel sheet before finishing annealing performed (after skin pass rolling performed) are described.

The original sheet of the non-oriented electromagnetic steel sheet after skin pass rolling and before finishing annealing, according to the embodiment has the following GOS (Grain Orientation Spread) value. The GOS with respect to the total field of view in measurement with SEM-EBSD (hereinafter, also referred to as "GOS value") is obtained by averaging the differences in orientation among all measurement points (pixels) in the same grain, and the GOS value is higher in a crystal grain having large strain. In a case in which the GOS value is small after skin pass rolling, namely, a low strain state is made, grain growth by bulging easily occurs in finishing annealing as the next step. Accordingly, the number average value Gs of the GOS value after skin pass rolling is set to 3.0 or less.

In this regard, in a case in which the number average value Gs of the GOS value is less than 0.8, the amount of strain is too decreased and the finishing annealing time taken for grain growth by bulging is elongated.

Accordingly, the number average value Gs of the GOS value after skin pass rolling is set to from 0.8 to 3.0 or less.

The method of calculating Gs is described.

The number average value of the GOS value is determined by analysis with OIM Analysis 7.3 by use of the SEM-EBSD data in the prescription of the above crystal orientation, and is defined as Gs.

It is necessary in calculation of the GOS value to define a crystal grain (Grain Size), and the details are as follows.

Grain Tolerance Angle: 5°
Minimum Grain Size: 2
Minimum Confidence Index: 0

The number average value Gs of the GOS value of an individual crystal grain, determined based on the definition, is determined. OIM Analysis 7.3 can allow for determination of a histogram of GOS by a Chart function and simultaneously determination of the number average value (the designation on the software is Number).

In the original sheet of the non-oriented electromagnetic steel sheet after skin pass rolling (before finishing annealing), as the area ratio $A_{s\alpha}$ of a crystal grain of having a crystal orientation of $\alpha$-fiber, with respect to the total field of view, in measurement with SEM-EBSD (hereinafter, also referred to as "a-fiber ratio") is larger, magnetic characteristics after finishing annealing are superior. Therefore, in the original sheet of the non-oriented electromagnetic steel sheet after skin pass rolling (before finishing annealing) according to the embodiment, the $\alpha$-fiber ratio ($A_{s\alpha}$) is set to 20.0% or more. $A_{s\alpha}$ is preferably 25.0% or more. The upper limit of the $\alpha$-fiber ratio ($A_{s\alpha}$) is not particularly limited, and is set to, for example, 70% or less. The lower limit of the $\alpha$-fiber ratio ($A_{s\alpha}$) may be 25.0% or more, and is preferably 30.0% or more.

In the embodiment, the $\alpha$-fiber corresponds to a {hkl}<011> orientation.

The method of measuring the $\alpha$-fiber ratio is described.

The {hkl}<011> orientation is extracted (a tolerance within 10°) in a measurement region by SEM-EBSD at a depth of 1/2 of the sheet thickness from the surface, with OIM Analysis 7.3. The area extracted is divided by the area of the measurement region, to determine a percentage. This percentage is defined as the $\alpha$-fiber ratio. The measurement region by SEM-EBSD (namely, total field of view) is set to a size of 1000 $\mu$m or more $\times$ 1000 $\mu$m or more on a cross section of the sheet width center part in the sheet thickness direction. Measurement conditions with SEM-EBSD are conditions described with respect to the measurement conditions for determining the area ratio of the oriented grain.

In the original sheet of the non-oriented electromagnetic steel sheet after skin pass rolling and before finishing annealing, according to the embodiment, the ODF intensity in a {100}<011> orientation in creation of an ODF by measurement with SEM-EBSD is set to 15.0 or less. The ODF intensity in the {100}<011> orientation is here the ODF value at $\varphi1 = 0°$ and $\Phi = 0°$ in the ODF created with SEM-EBSD data in the prescription of the above crystal orientation. A {411}<011> orientation is excellent in terms of magnetic characteristics and is lower than the {100}<011> orientation in terms of stress sensitivity, and thus causes less degradation of magnetism of a swaging core or the like. The ODF intensity in the {100}<011> orientation after skin pass rolling (before finishing annealing) can be set to 15.0 or less, thereby reinforcing the {411}<011> orientation after subsequent finishing annealing. The lower limit of the ODF intensity in the {100}<011> orientation is not particularly limited, and is set to, for example, -0.1.

The ODF intensity in a specified orientation including the {100}<011> orientation is determined by the same method as in the above non-oriented electromagnetic steel sheet.

The non-oriented electromagnetic steel sheet according to the embodiment can be formed into a core and thus such a core is widely applicable in any application in which magnetic characteristics (high magnetic flux density and low iron loss) are demanded. Applications of such a core are, for example, as follows.

(A) Servo motor, stepping motor, or compressor used for electric device
(B) Driving motor used for electric vehicle or hybrid vehicle, herein, vehicle encompassing automobile, automatic two-wheeled vehicle, railway, or the like.
(C) Power generator
(D) Iron core, choke coil, or reactor in various applications
(E) Current sensor, and the like

The non-oriented electromagnetic steel sheet according to the embodiment is applicable in any application other than the above applications. The non-oriented electromagnetic steel sheet according to the embodiment is suitable particularly in a divided core in which a 45° direction to the rolling direction of the steel sheet is designed so as to correspond to a main magnetization direction of the core, or furthermore is suitable in a divided core of a driving motor of an electric vehicle or a hybrid vehicle, the core being applied in a high-frequency range of 1000 Hz or more.

It is to be noted that the above industrial advantage can be obtained not only in a case in which a core is formed by punching and layering the non-oriented electromagnetic steel sheet according to the embodiment, but also in a case in which a core is formed by punching and layering an original sheet of the non-oriented electromagnetic steel sheet according to the embodiment and subsequently subjected to an appropriate heat treatment. Therefore, the disclosure is directed to both a core formed by layering the non-oriented electromagnetic steel sheet according to the embodiment and a core formed by layering the original sheet of the non-oriented electromagnetic steel sheet according to the embodiment.

These cores are different merely in the timing of performing in a production process, between a case of "finishing annealing" described below to be performed in a state of the steel sheet before core formation and a case of such finishing annealing to be performed in the state of a core formed, and both the cases can enjoy a suitable effect. The timing of "finishing annealing" to be performed is described below.

A core formed by layering the original sheet of the non-oriented electromagnetic steel sheet according to the embodiment can also be used without finishing annealing. In this case, magnetic characteristics are not especially favorable, but strain due to skin pass rolling is accumulated and proof stress is higher. Therefore, such a core is considered to be preferably applied as a rotor core in which suppression of deformation due to centrifugal force associated with high-speed rotation is more important than magnetic characteristics.

Next, the cold-rolled steel sheet according to the embodiment is described.

The cold-rolled steel sheet according to the embodiment is a cold-rolled steel sheet used for production of the non-oriented electromagnetic steel sheet.

Since no chemical composition is substantially changed during production of the non-oriented electromagnetic steel sheet from the cold-rolled steel sheet, the chemical composition of the cold-rolled steel sheet according to the embodiment is set to the same range as that of the non-oriented electromagnetic steel sheet according to the embodiment.

In the cold-rolled steel sheet according to the embodiment, the area ratio $A_{a\alpha}$ of a crystal grain of a crystal orientation of $\alpha$-fiber, with respect to the total field of view, in measurement of a plane in parallel with a rolling plane at a depth of 1/2 of the sheet thickness from the steel sheet surface with SEM-EBSD is 15.0% or more.

In the case of an $A_{a\alpha}$ of less than 15.0%, the $\alpha$-fiber ratio ($A_{s\alpha}$) after light pressure cold rolling (skin pass rolling) does not reach 20.0% or more and the {411}<011> ratio after finishing annealing does not reach 15.0% or more.

The area ratio $A_{a\alpha}$ of a crystal grain having the crystal orientation of $\alpha$-fiber is not particularly limited, and is set to, for example, 70% or less. The lower limit of the $A_{a\alpha}$ may be set to 20.0% or more, and is preferably set to 25.0% or more.

The measurement method with respect to the crystal orientation is the same as in the non-oriented electromagnetic steel sheet.

Next, one example of a method of producing each of the original sheet and the cold-rolled steel sheet of the non-oriented electromagnetic steel sheet according to the embodiment, non-oriented electromagnetic steel sheet is described. The non-oriented electromagnetic steel sheet according to the embodiment is obtained by a production method including a hot rolling step, a cooling step, a cold rolling step, an intermediate annealing step, a skin pass rolling step (light pressure cold rolling step), and a finishing annealing step.

The original sheet of the non-oriented electromagnetic steel sheet according to the embodiment is obtained by steps (hot rolling step, cooling step, cold rolling step, intermediate annealing step, skin pass rolling step) before finishing annealing.

The cold-rolled steel sheet according to the embodiment is obtained by steps (hot rolling step, cooling step, cold rolling step, intermediate annealing step) before intermediate annealing.

Hereinafter, preferred conditions of each step are described.

The $Ar_3$ temperature is the transformation temperature $Ar_3$ (°C) defined by the above Formula (1).

(Hot-Rolling Step)

In the hot rolling step, hot rolling of a steel material satisfying the above chemical composition is performed, to obtain a hot-rolled steel sheet. The hot rolling step includes a heating process and a rolling process.

The steel material is, for example, a slab produced by usual continuous casting, and the steel material of the above composition is produced by a well-known method. For example, molten steel is produced in a converter furnace, an electric furnace, or the like. The molten steel produced is secondary-refined with a degassing installation or the like and thus formed into molten steel having the above chemical composition (the chemical composition is not substantially changed in subsequent steps). The molten steel is used and the slab is cast by a continuous casting method or an ingot-making method. The slab cast produced may be cogged.

In the heating process, the steel material having the above chemical composition is preferably heated to from 1000 to 1200°C. Specifically, the steel material is inserted into a heating furnace or a soaking furnace and heated in the furnace. The retention time at the above heating temperature in the heating furnace or the soaking furnace is not particularly limited, and is, for example, from 30 to 200 hours.

In the rolling process, the steel material heated in the heating process is rolled multiple passes, to produce a hot-rolled steel sheet. Here, the "pass" means that the steel sheet passes through one rolling stand having a pair of work rolls and receives screw-down. In the hot rolling, for example, tandem rolling may be performed with a tandem rolling machine including a plurality of rolling stands aligned (each rolling stand having a pair of work rolls), to perform multiple-pass rolling, or reverse rolling with a pair of work rolls may be performed, to perform multiple-pass rolling. It is preferable from the viewpoint of productivity to perform multiple-pass rolling with a tandem rolling machine.

Rolling in the rolling process (rough rolling and finishing rolling) provides hot rolling by heating the above steel material. The steel material is, for example, a slab produced by usual continuous casting. The slab is heated at the $Ar_3$ temperature or more and in a temperature range in which the steel structure serves as a $\gamma$-phase. Hot rolling is started in a temperature range in which the steel structure serves as a $\gamma$-phase (hereinafter, this temperature range may be designated as "y-region"), performed in the $\gamma$-region except for necessary some passes including the final pass of finishing rolling, performed in a temperature range in which an $\alpha$-phase is present in the steel structure (hereinafter, this temperature range may be designated as "$\alpha$-region") necessary some passes including the final pass of finishing rolling, and thus completed. In general, the former stage to the middle stage of rough rolling and finishing rolling is performed in the $\gamma$-region, and the latter stage of finishing rolling is performed in the $\alpha$-region.

In the embodiment, rolling is performed such that the rolling initiation temperature (namely, heating temperature of the steel material before rolling) is more than the $Ar_3$ temperature + 20°C, the rolling completion temperature (namely, finishing rolling temperature FT) is less than the $Ar_3$ temperature, the rolling reduction in a period taken until first passing through the $Ar_3$ temperature backward from a point of time of completion of rolling (namely, total rolling reduction in the temperature range from the finishing rolling temperature FT to less than the $Ar_3$ temperature in the final $\alpha$-region) is 15% or more, and the rolling reduction in a period taken until first passing through the $Ar_3$ temperature + 20°C backward from the point of time of first passing through the $Ar_3$ temperature (namely, total rolling reduction in the temperature range of from the $Ar_3$ temperature to $Ar_3$ + 20°C immediately before final rolling in the $\alpha$-region) is 10% or more.

Thus, the total rolling reduction in the temperature range of from the $Ar_3$ temperature to $Ar_3$ + 20°C immediately before final rolling in the $\alpha$-region is set to 10% or more. The upper limit of the rolling reduction is not restricted, and is set to, for example, 40% or less.

Furthermore, the rolling reduction in the temperature range of from the finishing rolling temperature FT to less than the $Ar_3$ temperature in the final $\alpha$-region is set to 15% or more in total in consideration of also the case of multiple-pass rolling. The upper limit of this total rolling reduction is not restricted, and is set to, for example, 40% or less.

The upper limit of the rolling initiation temperature is not here particularly limited, and is set to, for example, 1200°C or less.

The lower limit of the rolling completion temperature (namely, finishing rolling temperature FT) is not particularly limited, and is set to, for example, the $Ar_3$ temperature - 100°C or more.

The rolling initiation temperature (namely, heating temperature of the steel material before rolling) refers to the initiation temperature of rough rolling and also the surface temperature of the steel material in heating of the steel material before rough rolling.

The rolling completion temperature (namely, finishing rolling temperature FT) refers to the surface temperature of the hot-rolled steel sheet immediately after finishing rolling.

Other temperature, for example, the $Ar_3$ temperature, represents the surface temperature of the steel material or the steel sheet.

Rolling in the temperature range more than $Ar_3$ + 20°C immediately before final rolling in the $\alpha$-region has almost no influence on the grain size of a processed $\gamma$-grain before phase transformation, leads to formation of a coarse processed $\alpha$-grain after transformation, and is irrelevant to accumulation in {411}<011> in a final product. The lower limit of the rolling temperature is the $Ar_3$ temperature.

In a case in which the rolling ratio in the temperature range of from the $Ar_3$ temperature to $Ar_3$ + 20°C immediately before final rolling in the $\alpha$-region is less than 10%, accumulation of strain in a processed $\gamma$-grain before phase transformation is lacked and a coarse processed $\alpha$-grain is formed, to hardly result in the occurrence of accumulation in {411}<011> in a final product. The rolling ratio in the temperature range of from the $Ar_3$ temperature to $Ar_3$ + 20°C is set to preferably 15% or more, more preferably 20% or more. The upper limit in total rolling reduction is not defined, but an upper limit of more than 40% causes the load of a rolling machine to be too high and thus the upper limit is preferably set to 40%.

In a case in which the rolling reduction in the temperature range of from the finishing rolling temperature FT to less than the $Ar_3$ temperature in the final $\alpha$-region corresponds to less than 15%, processing strain in the $\alpha$-region cannot be accumulated in a processed $\alpha$-grain after phase transformation from a processed $\gamma$-grain, and accumulation in a {411} <011> crystal orientation in a final product hardly occurs. Rolling reduction in the temperature range of from the finishing rolling temperature FT to less than the $Ar_3$ temperature is preferably 20% or more, more preferably 25% or more. The upper limit in total rolling reduction is not defined, but an upper limit of more than 40% causes the load of a rolling machine to be too high and thus the upper limit is preferably set to 40%.

In the embodiment, the rolling reduction RR0 in hot rolling is defined as follows.

Rolling reduction RR0 (%) = (1 - Sheet thickness after rolling in relevant temperature range at final pass in hot rolling/ Sheet thickness before rolling in relevant temperature range at first pass in hot rolling) $\times$ 100

The lower temperature in rolling in the $\alpha$-region is not particularly limited, and is preferably set to 600°C or more because a decrease in rolling temperature causes an increase in load of a rolling machine.

The above rolling temperature is considered to be varied above and below the determination temperature defined (the $Ar_3$ temperature, or $Ar_3$ + 20°C), during processing in a rolling pass, due to competition between a decrease in temperature by roll contact and a cooling lubricant and an increase in temperature by processing. The embodiment deals with such a circumstance, as follows.

It is assumed that the temperature at an inlet of a rolling pass is TPI (°C), the sheet thickness at the inlet is TCI (mm), the temperature at an outlet of the rolling pass is TPO (°C), and the sheet thickness at the outlet is TCO (mm), and furthermore the change in sheet thickness and the change in temperature in the rolling pass are simply changed with having a linear relation. In other words, it is assumed that, in a case in which the sheet thickness and the temperature at a specific point in a rolling pass are respectively TCa (mm) and TPa (°C), the following Formula is always satisfied during the rolling pass.

$$(TCa - TCO)/(TCI - TCO) = (TPa - TPO)/(TPI - TPO)$$

Thus, even in the case of attainment of the determination temperature defined (the $Ar_3$ temperature, or $Ar_3$ + 20°C) in the present production method, during a rolling pass, the sheet thickness at this point of time can be determined.

In other words, the sheet thickness TCa (mm) at the point of time of the attainment of a specified temperature TPa (°C) during a rolling pass can be obtained by

$$TCa = TCO + (TCI - TCO) \times (TPa - TPO)/(TPI - TPO).$$

It is to be noted here that the above assumption is made by also supposing that the temperature at an outlet of a rolling pass is higher than the temperature at an inlet thereof. In other words, it is determined that, even in a situation in which a steel sheet exhibiting a temperature TPI at the inlet of the pass, of less than the $Ar_3$ temperature, is raised in temperature due to generation of heat by processing in the pass and is discharged at a temperature TPO at the outlet, of the $Ar_3$ temperature or more, rolling in the $\gamma$-region (the temperature range of from the $Ar_3$ temperature to $Ar_3$ + 20°C), necessary for the disclosure, is provided at a later stage of the pass.

It is also considered that the variation in temperature, with the $Ar_3$ temperature being sandwiched, occurs over multiple passes. In such a case, in the embodiment, rolling conditions in the $\alpha$-region are directed to "final rolling processing in the $\alpha$-region". Rolling conditions in the $\gamma$-region are directed to "rolling processing in the $\gamma$-region, immediately before the "final rolling processing in the $\alpha$-region"". In other words, in a case in which the rolling temperature after the initiation of hot rolling in the $\gamma$-region is varied like $\gamma$-region (initiation of heat rolling) → $\alpha$-region 1 → $\gamma$-region 1 → $\alpha$-region 2 → $\gamma$-region 2 → $\alpha$-region 3 (end of heat rolling) and also in a case in which the $\alpha$-region 3 and the $\gamma$-region 2 are matched with conditions in the embodiment, the steel sheet of the embodiment can be obtained.

The rolling temperature in each pass can be measured with, for example, a temperature measuring instrument disposed at an inlet or an outlet of a rolling stand in which screw-down of a target pass is to be performed. It is not necessary to dispose a temperature measuring instrument at each of all inlets and outlets of a rolling stand in which the temperature range is in the range of the embodiment, and the rolling temperature of the rolling stand on the way may be calculated by calculation from the actual temperatures of respective temperature measuring instruments appropriately disposed in front of and behind the inlets and the outlets. It is rather usual in current hot rolling to perform control with the temperature by such calculation.

(Cooling Step)

In the cooling step, the hot-rolled steel sheet after hot rolling step is cooled. This cooling provides a moderately fine crystal grain with high strain. Cooling conditions are set so that this cooling is initiated on or after 0.10 seconds from passing through a final pass of finishing rolling (after a lapse of 0.10 seconds or more) to allow the surface temperature of the hot-rolled steel sheet to be from 300°C to the $Ar_3$ temperature - 20°C after 3 seconds. The hot-rolled steel sheet is here set so as not to be subjected to immediate quenching. In other words, this cooling is initiated after a lapse of 0.10 seconds or more from the final pass of finishing rolling and the temperature is allowed to be from 300°C to the $Ar_3$ temperature - 20°C after 3 seconds. The passing through the final pass of finishing rolling means the point of time at which a forward end part of the steel sheet passes through the outlet of rolling. The cooling initiation means that a forward end part of the steel sheet enters a colling zone of a cooling apparatus and accelerated cooling exceeding natural cooling is initiated. The upper limit of the lapse time of such cooling initiation is not particularly limited, and, for example, cooling may be initiated within 30 seconds from the final pass of finishing rolling and is preferably initiated within 3.0 seconds therefrom. The natural cooling is here cooling at a cooling rate of from 1 to 10°C/s.

Thus, immediate quenching is avoided, whereby a special quenching apparatus is not needed and an advantage in terms of production (cost) is also achieved. Immediate quenching causes introduction of excess thermal strain into the texture of the hot-rolled steel sheet, and causes accumulation in a {411}<148> orientation and a {100}<011> orientation in the structure after subsequent finishing annealing, thereby weakening preferential accumulation in the {411}<011> orientation.

Cooling conditions are preferably conditions so that the average crystal grain size in the hot-rolled steel sheet after cooling step, namely, before cold rolling is from 3 to 10 $\mu$m.

In order that the average crystal grain size in the hot-rolled steel sheet before cold rolling is from 3 to 10 $\mu$m, a temperature equal to or less than the $Ar_3$ temperature - 20°C may be achieved within 3 seconds after passing through the final pass of finishing rolling.

In a case in which the temperature of the steel sheet after 3 seconds from passing through the final pass of finishing rolling is less than 300°C, the average crystal grain size in the hot-rolled steel sheet is excessively refined. Therefore, the temperature of the steel sheet after 3 seconds from passing through the final pass of finishing rolling is set to 300°C or more. The temperature may also be set to 600°C or more.

In a case in which the temperature at which cooling of the steel sheet after passing through the final pass of finishing rolling is stopped is also less than 300°C, the average crystal grain size in the hot-rolled steel sheet is excessively refined. Therefore, the temperature at which cooling of the steel sheet after passing through the final pass of finishing rolling is set to 300°C or more. The temperature may also be set to 600°C or more.

The average crystal grain size in the hot-rolled steel sheet before cold rolling is measured in the same manner as in the average crystal grain size in the non-oriented electromagnetic steel sheet according to the embodiment.

As described above, a suitable crystalline structure not to be excessively refined can be obtained by performing transformation in a state in which appropriate processing strain is provided to a $\gamma$-phase structure, furthermore applying appropriate processing strain to an $\alpha$-phase structure, and performing appropriate cooling in which not only the processing strain is inhibited from being recovered, but also introduction of thermal strain is avoided. This crystalline structure can be subsequently subjected to cold rolling, thereby developing an $\alpha$-fiber after intermediate annealing, and developing a {411}<011> orientation to be usually hardly developed after a subsequent skin pass and finishing annealing. In a case in which the crystalline structure at this point of time is not appropriate, an $\alpha$-fiber is hardly developed after cold rolling and intermediate annealing and a desired {411}<011> ratio is not obtained in some cases.

The hot-rolled steel sheet temperature (in particular, finishing rolling temperature), and the surface temperature of the hot-rolled steel sheet after 3 seconds from passing through the final pass of finishing rolling are measured by the following method.

A cooling apparatus and a conveyor line (for example, conveyor roller) are placed downstream of a hot rolling machine in a hot rolling facility line used for production of the electromagnetic steel sheet. A temperature measuring instrument measuring the surface temperature of the hot-rolled steel sheet is placed at an outlet of a rolling stand performing the final pass, of the hot rolling machine. A plurality of temperature measuring instruments is aligned along with the conveyor line also on a conveyor roller placed downstream of the rolling stand. Therefore, the hot rolling temperature, and the surface temperature of the hot-rolled steel sheet after 3 seconds from passing through the final pass of finishing rolling are measured with a temperature measuring instrument placed in a hot rolling facility line.

The cooling apparatus is placed downstream of the rolling stand performing the final pass. A plurality of such cooling apparatuses is generally placed, and a temperature measuring instrument is placed at an inlet of each of such cooling apparatuses. The cooling apparatus may be, for example, a well-known water cooling apparatus or a well-known forced air cooling apparatus. The cooling apparatus is preferably a water cooling apparatus. The cooling liquid in the water cooling apparatus may be water, or a mixed fluid of water and air.

Thereafter, annealing (hot-rolled sheet annealing) of the hot-rolled steel sheet is not performed, and cold rolling of the hot-rolled steel sheet is performed.

(Cold-Rolling Step)

In the cold rolling step, the hot-rolled steel sheet after the cooling step is cold-rolled, to obtain a rolled steel sheet. Specifically, the hot-rolled steel sheet is rolled up without hot-rolled sheet annealing performed, and the hot-rolled sheet is cold-rolled, to obtain a rolled steel sheet. The hot-rolled sheet annealing mentioned here means, for example, a heat treatment at a rate of temperature rise of 900°C or less, but 300°C or more.

Cold-rolling may be performed by, for example, performing tandem rolling with a tandem rolling machine including a plurality of rolling stands aligned (each rolling stand having a pair of work rolls), to perform multiple-pass rolling. Alternatively, reverse rolling with a Sendzimir rolling machine or the like having a pair of work rolls may be performed, to perform rolling one pass or multiple passes. It is preferable from the viewpoint of productivity to perform multiple-pass rolling with a tandem rolling machine.

In cold rolling, cold rolling is performed without any annealing treatment on the way of cold rolling. For example, in a case in which cold rolling is performed multiple passes by performing reverse rolling, cold rolling is performed multiple passes without any annealing treatment sandwiched between a pass and a pass of cold rolling. In a case in which annealing is performed between such pass and pass, a desired orientation cannot be developed in a step described below.

Cold rolling may also be performed only one pass, with a reverse type rolling machine. In a case in which cold rolling with a tandem type rolling machine is performed, such cold rolling is performed continuously multiple passes (pass in each rolling stand).

In the embodiment, the rolling reduction RR1 (%) in cold rolling is preferably set to from 75 to 95%. The rolling reduction RR1 is here defined as follows.

Rolling reduction RR1 (%) = (1 - Sheet thickness after rolling of final pass in cold rolling/Sheet thickness before rolling of first pass in cold rolling) $\times$ 100

(Intermediate Annealing Step)

In the intermediate annealing step, the rolled steel sheet is subjected to intermediate annealing. In the embodiment, the annealing temperature (intermediate annealing temperature T1) (°C) is preferably controlled to 900°C or less. An intermediate annealing temperature of more than the $Ac_1$ temperature causes transformation of one part of the structure of the steel sheet, into austenite, whereby a crystal orientation due to such transformation sometimes causes no sufficient growth of a {411}<011> oriented grain during subsequent skin pass rolling and finishing annealing, no increase in magnetic flux density, and no decrease in stress sensitivity.

In this regard, a too low intermediate annealing temperature sometimes causes no occurrence of recrystallization, no sufficient growth of a {411}<011> oriented grain during subsequent skin pass rolling and finishing annealing, no increase in magnetic flux density, and no decrease in stress sensitivity. Accordingly, the intermediate annealing temperature T1 (°C) is preferably set to 600°C or more, more preferably 700°C or more.

The intermediate annealing temperature T1 (°C) is the sheet temperature (surface temperature) in the vicinity of an extraction port of an annealing furnace.

The retention time at the intermediate annealing temperature T1 (°C) in the intermediate annealing step may be any time well-known by those skilled in the art. The retention time at the intermediate annealing temperature T1 (°C) is, for example, from 5 to 60 seconds, but not limited thereto. The rate of temperature rise to the intermediate annealing temperature T1 (°C) may also be any well-known rate. The rate of temperature rise to the intermediate annealing temperature T1 (°C) is, for example, from 10.0 to 20.0°C/sec., but not limited thereto.

The atmosphere during intermediate annealing is not particularly limited, and, for example, an atmosphere gas (dry) is used in which 20% of $H_2$ at the volume ratio is contained and the balance is composed of $N_2$. The cooling rate of the steel sheet after intermediate annealing is not particularly limited, and is, for example, from 5.0 to 60.0°C/sec.

After completion until intermediate annealing under the above conditions, the resulting cold-rolled steel sheet is the cold-rolled steel sheet according to the embodiment, in which the $\alpha$-fiber ratio (a tolerance within 10°) in measurement with SEM-EBSD is 15.0% or more. In order that the $\alpha$-fiber ratio (a tolerance within 10°) is thus 15.0% or more at the stage before skin pass rolling, it is necessary to set an adequate chemical composition (the transformation temperature $Ar_3$ obtained by Formula (1), and the contents of Mn, Ni, Cu, and the like are in the predetermined ranges) and set conditions in steps from hot rolling to intermediate annealing to the above conditions, and, in particular, the temperature and the rolling reduction at the final stage of finishing rolling, and subsequent cooling conditions are important. An $\alpha$-fiber easily generating a {411}<011> orientation is developed by transforming partially recrystallized austenite into ferrite and furthermore moderately processing the ferrite at the final stage of hot rolling, then cooling the resultant so that not only processing strain is kept, but also introduction of thermal strain is avoided, to cold roll the hot-rolled steel sheet in which the average crystal grain size is from 3 to 10 $\mu$m, after hot rolling, and thereafter subjecting the resultant to intermediate annealing. As described above, an excess amount of screw-down at a temperature immediately above the $Ar_3$ temperature results in a structure in which uncrystallized austenite is transformed, and does not result in a structure in which partially recrystallized austenite is transformed.

The cold-rolled steel sheet thus produced is subjected to skin pass rolling under conditions described below, to provide the original sheet of the non-oriented electromagnetic steel sheet according to the embodiment, and furthermore the original sheet is subjected to finishing annealing, to provide the non-oriented electromagnetic steel sheet according to the embodiment.

(Skin Pass Rolling Step)

In the skin pass rolling step, the cold-rolled steel sheet after the intermediate annealing step is subjected to skin pass rolling, to obtain an original sheet of the non-oriented electromagnetic steel sheet. Specifically, the cold-rolled steel sheet after the intermediate annealing step is subjected to rolling (cold rolling) at ordinary temperature in the air. Skin pass rolling here is made with, for example, a reverse rolling machine typified by the above described Sendzimir rolling machine, or a tandem rolling machine. Such skin pass rolling provides a non-oriented electromagnetic steel sheet (after skin pass rolling and before finishing annealing).

In the skin pass rolling, rolling is performed without any annealing treatment on the way. For example, in a case in which the skin pass rolling is performed multiple passes by performing reverse rolling, rolling is performed multiple times without any annealing treatment sandwiched between passes. The skin pass rolling may be performed only one pass with a reverse type rolling machine. In a case in which the skin pass rolling is performed with a tandem type rolling machine, rolling is performed continuously multiple passes (pass in each rolling stand).

As above, in the embodiment, strain is introduced into the steel sheet by hot rolling and cold rolling, and thereafter strain introduced into the steel sheet by intermediate annealing is decreased once. Then, skin pass rolling is performed. Thus, not only strain excessively introduced by cold rolling is decreased in intermediate annealing, but also intermediate annealing is performed, whereby a {111} grain is inhibited from being preferentially recrystallized in the steel sheet surface and a grain of a {411}<011> crystal orientation is allowed to remain. An appropriate amount of strain is then introduced into each crystal grain in the steel sheet in skin pass rolling, thereby providing a state in which grain growth by bulging easily occurs in finishing annealing as the next step.

In the embodiment, the rolling reduction RR2 in skin pass rolling is set to from 5 to 20%. The rolling reduction RR2 is here defined as follows.

Rolling reduction RR2 (%) = (1 - Sheet thickness after final pass in skin pass rolling/Sheet thickness before rolling at first pass in skin pass rolling) $\times$ 100

A rolling reduction RR2 of less than 5% causes a too small amount of strain, and elongates the finishing annealing time taken for grain growth by bulging. A rolling reduction RR2 of more than 20% causes a too large amount of strain, results in the occurrence of not bulging, but usual grain growth, and causes growth of {411}<148> and {111}<112> in finishing annealing. Accordingly, the rolling reduction RR2 is set to from 5 to 20%.

The number of passes in skin pass rolling may be only one (namely, only one rolling), or rolling by multiple passes may be performed.

As described above, the number average value Gs of the GOS value, and the $\alpha$-fiber ratio are obtained by subjecting the steel sheet which has an adequate chemical composition and which is subjected to appropriate hot rolling and cold rolling, to recrystallization in intermediate annealing, and skin pass rolling under the foregoing conditions.

Skin pass rolling performed in the embodiment is largely different in effect from skin pass rolling performed after finishing annealing. A predetermined structure can be obtained by performing hot rolling, cooling, cold rolling, intermediate annealing, skin pass rolling, and finishing annealing in the listed order under predetermined conditions.

(Finishing Annealing Step)

In the finishing annealing step, the original sheet of the non-oriented electromagnetic steel sheet, after the skin pass rolling step, is subjected to finishing annealing. This finishing annealing can allow for generation of bulging with the difference in strain, as driving force, with respect to each crystal orientation by skin pass rolling, preferential growth of an objective {411}<011> oriented grain, and a distribution of such an objective crystal orientation. Such annealing conditions can be appropriately set with confirmation of generation of bulging, by those skilled in the art, and are not particularly limited. Batch annealing is preferred in order to appropriately and sufficiently provide grain growth by bulging, and, as one example, such annealing at from 750°C to 900°C for a time of 2 hours or more can be exemplified. Preferably, annealing at 800°C for 2 hours can be exemplified. In a case in which the finishing annealing temperature T2 (°C) is set to less than 750°C, grain growth by bulging hardly sufficiently occurs. In this case, the degree of accumulation in the {411}<011> orientation is reduced. In a case in which the finishing annealing temperature T2 (°C) is more than 900°C, one part of the structure of the steel sheet is transformed into austenite, and grain growth by bulging does not occur and a desired {411} <011> ratio is not obtained. In a case in which the annealing time is less than 2 hours, grain growth by bulging hardly sufficiently occurs in some cases depending on the temperature, and the degree of accumulation in a {411}<011> orientation is reduced. The annealing time of finishing annealing is not particularly limited, but the effect is saturated even in the case of an annealing time of more than 10 hours, and therefore a preferred upper limit is 10 hours.

The rate of temperature rise TR2 to the finishing annealing temperature T2 in the finishing annealing step may be any rate of temperature rise well-known by those skilled in the art. The range of from 40°C/hour to less than 200°C/hour is exemplified, but not limited thereto.

The rate of temperature rise TR2 is determined by the following method. A thermocouple is attached to the steel sheet which has the above chemical composition and which is obtained by performing steps from the above hot rolling until skin pass, to provide a sample steel sheet. The sample steel sheet to which a thermocouple is attached is subjected to a temperature rise, and the time from the initiation of the temperature rise until attainment of the finishing annealing temperature T2 is measured. The rate of temperature rise TR2 is determined based on the time measured.

The atmosphere during the finishing annealing step is not particularly limited. The atmosphere during the finishing annealing step may be, for example, an atmosphere gas (dry) in which 20% of $H_2$ at the volume ratio is contained and the balance is composed of $N_2$, or an atmosphere of 100% of hydrogen. The cooling rate of the steel sheet after finishing annealing is not particularly limited. The degree of cooling is, for example, from 0.05 to 20°C/sec, but is not limited to such a range.

This finishing annealing may be performed, for example, following skin pass rolling by a steel sheet manufacturer, or may be performed by shipping the steel sheet to a core processor without finishing annealing performed as the next step of the skin pass rolling step, punching and/or layering the original sheet of the non-oriented electromagnetic steel sheet after skin pass rolling, with a core processor, and thereafter performing finishing annealing under conditions of an annealing temperature of from 750°C to 900°C for an annealing time of 2 hours or more. This case is efficient because it can be performed also as "strain removal annealing" commonly performed with respect to a motor core by a core processor or a motor manufacturer. Of course, the steel sheet subjected to finishing annealing may be punched and/or layered, thus formed into a core member or a core shape, and then subjected to strain removal annealing.

The above production method can produce the non-oriented electromagnetic steel sheet according to the embodiment (encompassing the case of a non-oriented electromagnetic steel sheet as one part of a core in a case in which punching, layering, and strain removal annealing are performed).

In the production method according to the embodiment, for example, shot-blasting and/or acid pickling may be performed after the cooling step and before the cold rolling step in the above production process. In shot-blasting, the steel sheet after hot rolling is subjected to shot-blasting, to break and remove scale formed on the surface of the steel sheet after hot rolling. In acid pickling, the steel sheet after hot rolling is subjected to an acid pickling treatment. The acid pickling treatment utilizes, for example, an aqueous hydrochloric acid solution as an acid pickling bath. Acid pickling allows for removal of scale formed on the surface of the steel sheet. Shot-blasting may be performed after the cooling step and before the cold rolling step, and then acid pickling may be performed. Alternatively, acid pickling may be performed and shot-blasting is not necessarily performed after the cooling step and before the cold rolling step. Shot-blasting may be performed and the acid pickling treatment is not necessarily performed after the cooling step and before the cold rolling step. Shot-blasting and acid pickling are each an optional step. Accordingly, both the shot-blasting step and the acid pickling step are not necessarily performed.

(Insulation Film Formation Step)

The method of producing an electromagnetic steel sheet according to the embodiment may further involve forming an insulation film on a surface of the steel sheet after finishing annealing (non-oriented electromagnetic steel sheet) by coating, after the finishing annealing step. The insulation film formation step is an optional step. Accordingly, coating is not necessarily performed after finishing annealing.

The type of the insulation film is not particularly limited. The insulation film may be an organic component, or may be an inorganic component, and an insulation coating may contain an organic component and an inorganic component. The inorganic component is, for example, a bichromatic acid/boric acid-based, phosphoric acid-based, or silica-based component. The organic component is, for example, a common acrylic, acrylic/styrene-based, acrylic/silicon-based, silicon-based, polyester-based, epoxy-based, or fluorine-based resin. In a case in which coatability is considered, a preferred resin is an emulsion type resin. An insulation coating which exhibits adhesion ability by heating and/or pressurizing may also be applied. Such an insulation coating having adhesion ability is, for example, an acrylic, phenol-based, epoxy-based, or melamine-based resin.

The non-oriented electromagnetic steel sheet, the original sheet of the non-oriented electromagnetic steel sheet, and the cold-rolled steel sheet according to the embodiment are not limited to those produced by the above production methods. These are not limited to those produced by the above production methods as long as a predetermined chemical composition is adopted and prescribed items such as crystal orientations are within the predetermined scopes.

The core according to the embodiment is obtained by processing the non-oriented electromagnetic steel sheet or the original sheet of the non-oriented electromagnetic steel sheet according to the embodiment, into a core by a known method.

For example, the non-oriented electromagnetic steel sheet according to the embodiment can be produced by performing punching and/or layering.

The original sheet of the non-oriented electromagnetic steel sheet according to the embodiment can be punched and/or layered, and subjected to finishing annealing at an annealing temperature of from 750°C to 900°C for 2 hours or more, thereby producing the core. As described above, finishing annealing in this case can be performed as strain removal annealing commonly performed with respect to cores.

In all the above methods, the non-oriented electromagnetic steel sheet or the original sheet of the non-oriented electromagnetic steel sheet, forming the core, may be integrated as a core by a known method such as swaging, welding, or an adhesive or an insulation coating exhibiting adhesion ability. Examples of the method of punching and/or layering include a method of punching and layering a stator as an integrated core, together with a rotor, a method involving rotationally layering a stator punched as an integrated core, together with a rotor, or a method of punching and layering as a divided core, by combining a direction in which magnetic characteristics of the steel sheet are excellent, and a direction of teeth and/or yoke of the steel sheet.

EXAMPLES

Next, a non-oriented electromagnetic steel sheet according to an embodiment of the disclosure is specifically described with reference to Examples. Examples shown below are merely illustrative for such a non-oriented electromagnetic steel sheet according to an embodiment of the disclosure, and the non-oriented electromagnetic steel sheet according to the disclosure is not intended to be limited to the following Examples.

Ingots having chemical compositions shown in Table 1 were produced by casting molten steel. In Table 1, the column "Co and the like" indicates the contents of Co, Pt, Pb, and Au. Thereafter, ingots produced were each heated and hot rolling was performed under conditions shown in Table 2. In the present Examples, the heating temperature of each of the ingots (namely, the heating temperature of the steel material immediately before rolling) as the initiation temperature of rough rolling was defined as the rolling initiation temperature.

After passing through the final pass, cooling was performed under cooling conditions shown in Table 2 (the time from passing through the final pass of finishing rolling until the initiation of cooling, and the temperature of the steel sheet after 3 seconds after passing through the final pass).

In order to examine the texture after cooling, one part of the steel sheet was cut and removed, and the average crystal grain size in the plane in parallel with the rolling plane at a depth of 1/2 of the sheet thickness from the surface was measured by a cutting method of JIS G0551 (2020). The measurement results are shown in Table 2.

Next, hot-rolled sheet annealing was not performed in the hot-rolled steel sheet, scale was removed by acid pickling, and cold rolling was performed at a rolling reduction RR1 shown in Table 2. Intermediate annealing was then performed in which retention was made for 30 seconds in an atmosphere composed of 20% of hydrogen and 80% of nitrogen at the volume ratio with control of the rate of temperature rise to 15.0°C/sec and the intermediate annealing temperature T1 to a temperature shown in Table 2.

In order to examine the texture of the cold-rolled steel sheet before skin pass rolling (the texture after intermediate annealing), one part of the steel sheet was cut and removed, and such a test piece obtained by cutting and removing was reduced in thickness to a thickness of 1/2. A {hkl}<011> orientation was extracted (a tolerance within 10°) in a measurement region by SEM-EBSD of this processed plane, with OIM Analysis 7.3, and the area extracted was divided by the area of the measurement region, to determine the $\alpha$-fiber ratio $A_{a\alpha}$. The results are shown in Table 3.

Next, skin pass rolling was performed at a rolling reduction RR2 shown in Table 2.

In order to examine the texture of the original sheet of the non-oriented electromagnetic steel sheet after skin pass rolling (the texture after skin pass rolling) before finishing annealing performed, one part of the steel sheet was cut and removed, and such a test piece obtained by cutting and removing was reduced in thickness to a thickness of 1/2. The $\alpha$-fiber ratio $A_{s\alpha}$ of the processed plane was determined in the same manner as the above procedure. The ODF intensity in an {100}<011> orientation was determined as the ODF intensity obtained by creating an ODF in a measurement region by SEM-EBSD, of the processed plane, under the above conditions with OIM Analysis 7.3, and outputting the data of the ODF created, to define the ODF value of the {100}<011> orientation. Furthermore, Gs was determined with, as Gs, the number average value of the GOS value, by analysis with SEM-EBSD data, by OIM Analysis 7.3. The respective results are shown in Table 3.

Next, the steel sheet after skin pass rolling was subjected to finishing annealing at a rate of temperature rise of 100°C/hour and a finishing annealing temperature T2 shown in Table 2, in an atmosphere of 100% of hydrogen. The retention time at the finishing annealing temperature T2 was here set to 2 hours.

In order to examine the texture of the non-oriented electromagnetic steel sheet after finishing annealing (texture after finishing annealing), one part of the steel sheet was cut and removed, and such a test piece obtained by cutting and removing was reduced in thickness to a thickness of 1/2. The {411}<011> ratio, A411-011/A411-148, and A411-011/A100-011 were determined by observation in a measurement region by SEM-EBSD, of the processed plane, under the above measurement conditions. The $\varphi1(°)$ indicating the maximum intensity in a {411}<uvw> orientation and the $\Phi(°)$ indicating the maximum intensity in a {hkl}<011> orientation ($\varphi1$ and $\Phi$ at the maximum intensity) were determined by creating an ODF in a measurement region by SEM-EBSD, of the processed plane, under the above conditions with OIM Analysis 7.3, and outputting the data of the ODF created, to determine the $\varphi1$ as the maximum intensity and the $\Phi$ as the maximum intensity, at which the ODF value was maximum in a specified orientation range.

One part of the steel sheet was cut and removed, and the average crystal grain size in the plane in parallel with the rolling plane at a depth of 1/2 of the sheet thickness from the surface was measured by a cutting method of JIS G0551 (2020).

The respective results are shown in Table 3.

In order to examine magnetic characteristics after finishing annealing, not only the magnetic flux density B50 and the iron loss W10/400 were measured, but also the deterioration ratio of iron loss, of iron loss W10/50, under compression stress was determined as an index of stress sensitivity. The magnetic flux density B50 was determined with, as a measurement sample, a single plate magnetic characteristic test sample of 55-mm square, collected in each of two directions of 0° and 45° to the rolling direction. These two samples were subjected to measurement, and the value in a 45° direction with respect to the rolling direction was defined as the magnetic flux density B50 (45°) in a 45° direction and the average value in 0°, 45°, 90°, and 135° directions with respect to the rolling direction was defined as the whole periphery average of the magnetic flux density B50 (whole periphery). The iron loss W10/400 (45°) was evaluated with one collected as the above measurement sample, in the case of a 45° direction to the rolling direction. Furthermore, the deterioration ratio of iron loss $W_x$ [%] of the iron loss W10/50 in a 45° direction under compression stress was determined under the assumption that the iron loss W10/50 (45° direction) without stress was W10/50(0) and the iron loss W10/50 (45° direction) under a compression stress of 10 MPa was W10/50(10), and the deterioration ratio of iron loss $W_x$ was calculated by the following Formula. The measurement results are shown in Table 3.

$$W_x = \{W10/50(10) - W10/50(0)\}/W10/50(0)$$

A magnetic flux density B50 (whole periphery) of 16.15 T or more was determined to represent excellent magnetic characteristics of the whole periphery.

In a case in which the magnetic flux density B50 (B50 (45°)) in a 45° direction with respect to the rolling direction was 1.70 T or more, the iron loss W10/400 (W100/400 (45°)) in a 45° direction with respect to the rolling direction was 13.8 W/kg or less, and the deterioration ratio of iron loss of W10/50 in a 45° direction with respect to the rolling direction under compression stress was 40% or less, magnetic characteristics in a 45° direction were determined to be excellent.

The hot brittleness was evaluated by evaluating the number of cracks having a penetration depth (length in the sheet width direction) of 1 mm or more with respect to the sheet thickness of each of both end surfaces in the sheet width direction, in the region with a length of 10 m in the rolling direction from a position of 10 m in the rolling direction from the tip in the longitudinal direction of the outermost periphery of the hot-rolled sheet coil, a length of 10 m in the rolling direction with, as the center, each of positions of about 1/4, 1/2, and 3/4 of the entire length of the hot-rolled sheet coil, from the tip in the longitudinal direction of the outermost periphery of the coil, and a length of 10 m in the rolling direction from a position of 10 m in the rolling direction from the tip in the longitudinal direction of the innermost periphery of the coil. Specifically, the entire length of the hot-rolled sheet coil was 800 m, and therefore visual evaluation was performed at positions of from 10 to 20 m, from 195 to 205 m, from 395 to 405 m, from 595 to 605 m, and from 780 to 790 m in the rolling direction from the tip in the longitudinal direction of the outermost periphery of the coil (from 10 to 20 m from the tip in the longitudinal direction of the innermost periphery of the coil). A case of a number of cracks of less than 10 on such both end surfaces was designated as "Y" and a case of a number of cracks of 10 or more on any one or both of such both end surfaces was designated as "N".

The hot-rolled sheet coil is adopted as an evaluation object of the hot brittleness in the present Examples, and, in the case of evaluation of a steel sheet cut out from a hot-rolled coil, both end surfaces in the sheet width direction may also be observed at five or more different positions in the rolling direction of the steel sheet in the same manner as described above. For example, observation may be performed in the region of about 1/10 of the entire length in the rolling direction of the steel sheet with, as the center, each of positions of about 1/10, 1/4, 1/2, 3/4, and 9/10 of the length in the rolling direction of the steel sheet, and the entire length in the rolling direction of the steel sheet may be set to 1 m or more.

The cost was evaluated, and a case in which the total amount of Mn, Ni, and Cu was less than 2.5% was designated as "Y" and a case in which the total amount of Mn, Ni, and Cu was more than 2.5% was designated as "N".

[Table 1-1]

| Type of steel | Chemical composition (balance: Fe and impurities) | | | | | | | | | |
|---|---|---|---|---|---|---|---|---|---|---|
| | C | Si | sol.Al | S | N | P | Mn | Cu | Ni | Total of Mn, Cu, and Ni |
| | [% by mass] | [% by mass] | [% by mass] | [% by mass] | [% by mass] | [% by mass] | [% by mass] | [% by mass] | [% by mass] | [% by mass] |
| A01 | 0.0013 | 2.90 | 0.31 | 0.0018 | 0.0022 | 0.100 | 0.60 | 0.02 | | 0.62 |
| A02 | 0.0015 | 3.00 | 0.30 | 0.0021 | 0.0018 | 0.100 | 2.30 | 0.02 | | 2.32 |
| A03 | 0.0021 | 3.40 | 0.62 | 0.0033 | 0.0024 | 0.100 | 2.70 | 0.02 | | 2.72 |
| A04 | 0.0016 | 3.10 | 0.30 | 0.0021 | 0.0011 | 0.100 | 1.50 | 0.50 | 0.30 | 2.30 |
| A05 | 0.0013 | 3.00 | 0.30 | 0.0043 | 0.0038 | 0.100 | 1.80 | 0.50 | 0.30 | 2.60 |
| A06 | 0.0037 | 3.10 | 0.30 | 0.0021 | 0.0011 | 0.100 | 0.20 | 1.20 | 0.70 | 2.10 |
| A07 | 0.0087 | 2.80 | 0.30 | 0.0038 | 0.0042 | 0.100 | 2.30 | 1.20 | | 3.50 |
| A08 | 0.0022 | 3.10 | 0.30 | 0.0021 | 0.0011 | 0.100 | 2.30 | 0.02 | | 2.32 |
| A09 | 0.0013 | 3.30 | 0.40 | 0.0056 | 0.0026 | 0.100 | 2.40 | 0.02 | | 2.42 |
| A10 | 0.0062 | 3.10 | 0.30 | 0.0021 | 0.0018 | 0.100 | 2.30 | 0.02 | | 2.32 |
| A11 | 0.0033 | 2.70 | 0.30 | 0.0062 | 0.0035 | 0.100 | 2.20 | 0.03 | | 2.23 |
| A12 | 0.0016 | 3.10 | 0.30 | 0.0021 | 0.0023 | 0.100 | 2.30 | 0.02 | | 2.32 |
| A13 | 0.0042 | 3.10 | 0.30 | 0.0034 | 0.0011 | 0.100 | 2.10 | 0.05 | | 2.15 |
| | | | | | | | | | | |
| B01 | 0.0023 | 1.60 | 0.01 | 0.0019 | 0.0019 | 0.060 | 0.50 | 0.02 | | 0.52 |
| B02 | 0.0018 | 1.80 | 0.03 | 0.0016 | 0.0043 | 0.060 | 2.30 | 0.02 | | 2.32 |
| B03 | 0.0045 | 1.60 | 0.01 | 0.0019 | 0.0012 | 0.060 | 2.40 | 0.02 | | 2.42 |
| B04 | 0.0021 | 2.50 | 0.40 | 0.0012 | 0.0023 | 0.010 | 2.40 | 0.02 | | 2.42 |
| B05 | 0.0023 | 2.00 | 0.10 | 0.0095 | 0.0018 | 0.015 | 2.30 | 0.02 | | 2.32 |

(continued)

| Type of steel | Chemical composition (balance: Fe and impurities) | | | | | | | | | |
|---|---|---|---|---|---|---|---|---|---|---|
| | C | Si | sol.Al | S | N | P | Mn | Cu | Ni | Total of Mn, Cu, and Ni |
| | [% by mass] | [% by mass] | [% by mass] | [% by mass] | [% by mass] | [% by mass] | [% by mass] | [% by mass] | [% by mass] | [% by mass] |
| B06 | 0.0019 | 3.10 | 0.10 | 0.0021 | 0.0092 | 0.010 | 2.40 | 0.02 | | 2.42 |
| B07 | 0.0021 | 1.60 | 0.92 | 0.0007 | 0.0022 | 0.020 | 2.40 | 0.02 | | 2.42 |

[Table 1-2]

| Type of steel | Chemical composition (balance: Fe and impurities) | | | | | | | | | $Ar_3$ temperature |
|---|---|---|---|---|---|---|---|---|---|---|
| | Co and the like | Total of Mn, Cu, Ni,, Co, Pt, Pb, and Au | Ti | Nb | Mo | Cr | Sn | Sb | Mg and the like | |
| | [% by mass] | [% by mass] | [% by mass] | [% by mass] | [% by mass] | [% by mass] | [% by mass] | [% by mass] | [% by mass] | °C |
| A01 | | 0.62 | | | | | - | - | - | 1094 |
| A02 | | 2.32 | 0.002 | | | | - | - | - | 893 |
| A03 | | 2.72 | | 0.004 | | | - | - | - | 883 |
| A04 | | 2.30 | | | | | 0.02 | - | - | 921 |
| A05 | | 2.60 | | | | | - | 0.01 | - | 881 |
| A06 | | 2.10 | | | 0.3 | | - | - | - | 938 |
| A07 | | 3.50 | | | | | - | - | - | 742 |
| A08 | | 2.32 | | | | 0.2 | - | - | Mg:0.005 | 887 |
| A09 | | 2.42 | | | | | - | - | Mg:0.002, Pr:0.002 | 899 |
| A10 | | 2.32 | | 0.003 | | | - | - | Ca:0.002, Ce:0.002 | 895 |
| A11 | Co:0.05 | 2.28 | | | | | - | - | Sr:0.002, Cd:.0002 | 893 |
| A12 | Pb:0.02 | 2.34 | | | | 0.6 | - | - | Ba:0.002, Zn:0.002 | 868 |
| A13 | | 2.15 | | | | | - | - | La:0.002, Nd:0.002 | 916 |
| B01 | | 0.52 | | | | | - | - | - | 1028 |
| B02 | | 2.32 | | | | | 0.005 | - | - | 820 |
| B03 | | 2.42 | | | 0.5 | | - | - | - | 739 |
| B04 | | 2.42 | | | | | | | | 846 |
| B05 | Pt:0.01 | 2.33 | | | | | 0.06 | | | 819 |
| B06 | | 2.42 | | | | | | | | 842 |

(continued)

| Chemical composition (balance: Fe and impurities) | | | | | | | | | | | |
|---|---|---|---|---|---|---|---|---|---|---|---|
| Type of steel | Co and the like | Total of Mn, Cu, Ni,, Co, Pt, Pb, and Au | Ti | Nb | Mo | Cr | Sn | Sb | Mg and the like | Ar$_3$ temperature |
| B07 | Au:0.01 | 2.43 | | | | | | | | 861 |

[Table 2-1]

| No. | Type of steel 1 | Transformation point Ar₃ temperature | Hot rolling step Heating temperature (rolling initiation temperature) | Hot rolling step Rolling reduction from Ar₃ + 20°C to Ar₃ | Hot rolling step Rolling reduction from less than Ar₃ to FT | Hot rolling step Finishing rolling temperature FT (rolling completion temperature) | Cooling step Time until cooling initiation | Cooling step Temperature after 3 seconds | Cooling step Average crystal grain size after cooling | Cold-rolling step Rolling reduction RR1 | Intermediate annealing step Annealing temperature T1 | Skin pass rolling step Rolling reduction RR2 in rolling | Finishing annealing step Annealing temperature T2 |
|---|---|---|---|---|---|---|---|---|---|---|---|---|---|
| | | [°C] | [°C] | [%] | [%] | [°C] | Sec. | [°C] | [μm] | [%] | [°C] | [%] | [°C] |
| 1 | A01 | 1094 | 1300 | 20 | 25 | 1069 | 0.10 | 1009 | 13 | 86 | 700 | 10 | 800 |
| 2 | A02 | 893 | 1150 | 20 | 25 | 863 | 0.10 | 803 | 7 | 86 | 700 | 10 | 800 |
| 3 | A03 | 883 | 1150 | 20 | 25 | 855 | 0.10 | 795 | 6 | 86 | 700 | 10 | 800 |
| 4 | A04 | 921 | 1150 | 20 | 25 | 886 | 0.10 | 826 | 7 | 86 | 700 | 10 | 800 |
| 5 | A05 | 881 | 1150 | 20 | 25 | 856 | 0.10 | 796 | 7 | 86 | 700 | 10 | 800 |
| 6 | A06 | 938 | 1150 | 20 | 25 | 907 | 0.10 | 847 | 8 | 86 | 700 | 10 | 800 |
| 7 | A07 | 742 | 1150 | 20 | 25 | 710 | 0.10 | 650 | 8 | 86 | 700 | 10 | 800 |
| 8 | A8 | 887 | 1150 | 20 | 25 | 853 | 0.10 | 793 | 7 | 86 | 700 | 10 | 800 |
| 9 | A9 | 899 | 1150 | 20 | 25 | 866 | 0.10 | 806 | 8 | 86 | 700 | 10 | 800 |
| 10 | A10 | 895 | 1150 | 20 | 25 | 866 | 0.10 | 806 | 7 | 86 | 700 | 10 | 800 |
| 11 | A11 | 893 | 1150 | 20 | 25 | 858 | 0.10 | 798 | 6 | 86 | 700 | 10 | 800 |
| 12 | A12 | 868 | 1150 | 20 | 25 | 835 | 0.10 | 775 | 8 | 86 | 700 | 10 | 800 |
| 13 | A13 | 916 | 1150 | 20 | 25 | 884 | 0.10 | 824 | 7 | 86 | 700 | 10 | 800 |
| 14 | B01 | 1028 | 1250 | 20 | 25 | 995 | 0.10 | 935 | 9 | 86 | 700 | 10 | 800 |
| 15 | B02 | 820 | 1150 | 20 | 25 | 794 | 0.10 | 734 | 5 | 86 | 700 | 10 | 800 |
| 16 | B03 | 739 | 1150 | 20 | 25 | 710 | 0.10 | 650 | 4 | 86 | 700 | 10 | 800 |
| 17 | B04 | 846 | 1150 | 20 | 25 | 800 | 0.10 | 730 | 4 | 86 | 700 | 10 | 800 |
| 18 | B05 | 819 | 1020 | 20 | 28 | 760 | 0.10 | 690 | 6 | 86 | 700 | 10 | 800 |

(continued)

| No. | Type of steel 1 | Transformation point | Hot rolling step | | | | Cooling step | | | Cold-rolling step | Intermediate annealing step | Skin pass rolling step | Finishing annealing step |
| | | $Ar_3$ temperature | Heating temperature (rolling initiation temperature) | Rolling reduction from $Ar_3$ + 20°C to $Ar_3$ | Rolling reduction from less than $Ar_3$ to FT | Finishing rolling temperature FT (rolling completion temperature) | Time until cooling initiation | Temperature after 3 seconds | Average crystal grain size after cooling | Rolling reduction RR1 | Annealing temperature T1 | Rolling reduction RR2 in rolling | Annealing temperature T2 |
|---|---|---|---|---|---|---|---|---|---|---|---|---|---|
| 19 | B06 | 842 | 1150 | 20 | 25 | 750 | 0.10 | 650 | 4 | 86 | 700 | 10 | 800 |
| 20 | B07 | 861 | 1150 | 20 | 25 | 820 | 0.10 | 752 | 6 | 86 | 700 | 10 | 770 |

[Table 2-2]

| No. | Type of steel 1 | Transformation point | Hot rolling step | | | | Cooling step | | | Cold-rolling step | Intermediate annealing step | Skin pass rolling step | Finishing annealing step |
|---|---|---|---|---|---|---|---|---|---|---|---|---|---|
| | | $Ar_3$ temperature | Heating temperature (rolling initiation temperature) | Rolling reduction from $Ar_3$ + 20°C to $Ar_3$ | Rolling reduction at from less than $Ar_3$ to FT | Finishing rolling temperature FT (rolling completion temperature) | Time until cooling initiation | Temperature after 3 seconds | Average crystal grain size after cooling | Rolling reduction RR1 | Annealing temperature T1 | Rolling reduction RR2 in rolling | Annealing temperature T2 |
| | | [°C] | [°C] | [%] | [%] | [°C] | Sec. | [°C] | [μm] | [%] | [°C] | [%] | [°C] |
| 21 | A02 | 893 | 1150 | 8 | 25 | 850 | 0.10 | 650 | 11 | 86 | 700 | 15 | 800 |
| 22 | A02 | 893 | 1150 | 10 | 25 | 850 | 0.10 | 650 | 6 | 86 | 700 | 15 | 800 |
| 23 | A02 | 893 | 1150 | 30 | 25 | 850 | 0.10 | 650 | 7 | 86 | 700 | 15 | 800 |
| 24 | A02 | 893 | 1150 | 20 | 12 | 850 | 0.10 | 650 | 7 | 86 | 700 | 15 | 800 |
| 25 | A02 | 893 | 1150 | 20 | 15 | 850 | 0.10 | 650 | 6 | 86 | 700 | 15 | 800 |
| 26 | A02 | 893 | 1150 | 20 | 30 | 850 | 0.10 | 650 | 6 | 86 | 700 | 15 | 800 |
| 27 | A02 | 893 | 1150 | 20 | 25 | 850 | 0.05 | 650 | 2 | 86 | 700 | 15 | 800 |
| 28 | A02 | 893 | 1150 | 20 | 25 | 850 | 0.10 | 650 | 6 | 86 | 700 | 15 | 800 |
| 29 | A02 | 893 | 1150 | 20 | 25 | 850 | 0.50 | 650 | 7 | 86 | 700 | 15 | 800 |
| 30 | A02 | 893 | 1150 | 20 | 25 | 850 | 0.10 | 200 | 2 | 86 | 700 | 15 | 800 |
| 31 | A02 | 893 | 1150 | 20 | 25 | 850 | 0.10 | 650 | 6 | 86 | 700 | 3 | 800 |
| 32 | A02 | 893 | 1150 | 20 | 25 | 850 | 0.10 | 650 | 7 | 86 | 700 | 5 | 800 |
| 33 | A02 | 893 | 1150 | 20 | 25 | 850 | 0.10 | 650 | 7 | 86 | 700 | 25 | 800 |
| 34 | B02 | 820 | 1150 | 8 | 25 | 790 | 0.10 | 650 | 5 | 86 | 700 | 15 | 800 |
| 35 | B02 | 820 | 1150 | 20 | 12 | 790 | 0.10 | 650 | 4 | 86 | 700 | 15 | 800 |
| 36 | B02 | 820 | 1150 | 20 | 25 | 790 | 0.05 | 650 | 2 | 86 | 700 | 15 | 800 |
| 37 | B02 | 820 | 1150 | 20 | 25 | 800 | 0.50 | 790 | 10 | 86 | 700 | 15 | 800 |
| 38 | B02 | 820 | 1150 | 20 | 25 | 790 | 0.10 | 630 | 5 | 86 | 910 | 15 | 800 |

(continued)

| No. | Type of steel 1 | Transformation point | Hot rolling step | | | | Cooling step | | | Cold-rolling step | Intermediate annealing step | Skin pass rolling step | Finishing annealing step |
| | | Ar$_3$ temperature | Heating temperature (rolling initiation temperature) | Rolling reduction from Ar$_3$ + 20°C to Ar$_3$ | Rolling reduction at from less than Ar$_3$ to FT | Finishing rolling temperature FT (rolling completion temperature) | Time until cooling initiation | Temperature after 3 seconds | Average crystal grain size after cooling | Rolling reduction RR1 | Annealing temperature T1 | Rolling reduction RR2 in rolling | Annealing temperature T2 |
| | | [°C] | [°C] | [%] | [%] | [°C] | Sec. | [°C] | [μm] | [%] | [°C] | [%] | [°C] |
| 39 | B02 | 820 | 1150 | 20 | 25 | 790 | 0.10 | 630 | 6 | 86 | 610 | 15 | 800 |
| 40 | B04 | 846 | 1150 | 18 | 27 | 820 | 0.10 | 630 | 6 | 86 | 700 | 15 | 890 |
| 41 | B04 | 846 | 1150 | 20 | 25 | 820 | 0.10 | 640 | 5 | 86 | 700 | 5 | 890 |
| 42 | B04 | 846 | 1150 | 20 | 25 | 820 | 0.10 | 630 | 5 | 92 | 850 | 15 | 800 |
| 43 | B04 | 846 | 1150 | 20 | 25 | 830 | 0.10 | 640 | 7 | 78 | 700 | 18 | 800 |
| 44 | B04 | 846 | 1150 | 22 | 20 | 820 | 0.10 | 630 | 6 | 72 | 700 | 13 | 820 |
| 45 | B04 | 846 | 1150 | 20 | 25 | 820 | 0.10 | 630 | 5 | 86 | 890 | 15 | 800 |
| 46 | B04 | 846 | 1150 | 20 | 25 | 820 | 0.10 | 630 | 5 | 80 | 720 | 21 | 800 |
| 47 | B04 | 846 | 1150 | 20 | 25 | 820 | 0.10 | 630 | 6 | 94 | 700 | 8 | 800 |
| 48 | B04 | 846 | 1150 | 20 | 25 | 820 | 0.10 | 630 | 5 | 97 | 700 | 8 | 800 |
| 49 | B04 | 846 | 1150 | 20 | 25 | 820 | 0.10 | 630 | 5 | 88 | 720 | 6 | 800 |
| 50 | B04 | 846 | 1150 | 22 | 20 | 820 | 0.10 | 630 | 5 | 87 | 720 | 19 | 800 |
| 51 | B04 | 846 | 850 | Hot rolling cancelled due to overloading | | | | | | | | | |
| 52 | B04 | 846 | 1150 | 20 | 25 | 820 | 0.10 | 630 | 6 | 86 | 700 | 13 | 920 |
| 53 | B04 | 846 | 1150 | 20 | 25 | 820 | 0.10 | 630 | 7 | 86 | 700 | 15 | 740 |
| 54 | B04 | 846 | 1150 | 15 | 15 | 840 | 1.00 | 830 | 12 | 85 | 700 | 15 | 800 |

EP 4 650 474 A1

[Table 3-1-1]

| No. | α-Fiber ratio $A_{a\alpha}$ | α-Fiber ratio $A_{s\alpha}$ | Texture after intermediate annealing | | Texture after skin pass rolling | | Texture after finishing annealing | | |
|---|---|---|---|---|---|---|---|---|---|
| | | | ODF intensity in {100}<011> | Gs | {411}<011> ratio | {411}<uvw> ODF max φ1 | {hkl}<011> ODF max Φ | A411-011/A411-148 | A411-011/A100-011 |
| | [%] | [%] | [-] | [-] | [%] | [°] | [°] | [-] | [-] |
| 1 | 10 | 12.1 | 8.8 | 1.2 | 10.5 | 20 | 20 | 0.7 | 1.1 |
| 2 | 32.1 | 32.5 | 8.9 | 1.3 | 25.4 | 0 | 20 | 1.4 | 2.8 |
| 3 | 32.1 | 32.9 | 9.2 | 1.1 | 23.8 | 0 | 20 | 1.7 | 1.8 |
| 4 | 32.1 | 33.5 | 9.5 | 1.5 | 29.2 | 0 | 20 | 1.5 | 3.0 |
| 5 | 32.1 | 33.0 | 9.3 | 2.5 | 28.4 | 0 | 20 | 1.4 | 1.9 |
| 6 | 32.1 | 28.9 | 6.4 | 1.3 | 32 | 0 | 20 | 1.1 | 6.9 |
| 7 | 30 | 29.8 | 2.1 | 1.7 | 27 | 0 | 20 | 1.6 | 1.5 |
| 8 | 32 | 33.0 | 3.1 | 1.7 | 28 | 0 | 20 | 1.8 | 4.2 |
| 9 | 29 | 30.2 | 2.8 | 1.5 | 25 | 0 | 20 | 1.5 | 3.9 |
| 10 | 28 | 30.5 | 3.3 | 1.7 | 29 | 0 | 20 | 1.4 | 4.1 |
| 11 | 31.2 | 31.2 | 6.9 | 1.6 | 20 | 0 | 20 | 1.3 | 4.2 |
| 12 | 31.2 | 32.2 | 7.7 | 2.1 | 27.5 | 0 | 20 | 1.6 | 4.6 |
| 13 | 29.8 | 30.4 | 6.8 | 1.7 | 30.2 | 0 | 20 | 1.5 | 3.5 |
| 14 | 28.9 | 29.9 | 7.0 | 1.7 | 30.2 | 0 | 20 | 1.4 | 3.3 |
| 15 | 30.1 | 31.1 | 6.7 | 1.6 | 31.5 | 0 | 20 | 1.6 | 3.7 |
| 16 | 29.3 | 33.4 | 18.0 | 1.6 | 34.8 | 0 | 20 | 1.8 | 1.8 |
| 17 | 32.1 | 33.2 | 4.5 | 1.5 | 32.5 | 0 | 20 | 1.7 | 3.8 |
| 18 | 32.8 | 33.4 | 6.2 | 1.6 | 30.4 | 0 | 20 | 1.8 | 3.5 |
| 19 | 31.5 | 34.2 | 7.7 | 1.5 | 33.4 | 0 | 20 | 1.6 | 3.7 |
| 20 | 28.9 | 30.1 | 6.8 | 1.6 | 29 | 0 | 15 | 1.7 | 2.1 |

[Table 3-1-2]

| No. | Sheet thickness | Micro structure Average crystal grain size | Magnetic characteristics B50 (whole periphery) | B50 (45°) | W10/400 (45°) | Deterioration ratio of iron loss $W_x$ | Hot brittleness | Cost | Evaluation |
|---|---|---|---|---|---|---|---|---|---|
| | [mm] | [μm] | [T] | [T] | [W/kg] | [%] | | | |
| 1 | 0.30 | 58.6 | 1.560 | 1.600 | 14.2 | 52.1 | Y | Y | Comparative Example |
| 2 | 0.30 | 65.2 | 1.640 | 1.750 | 13.3 | 34.2 | Y | Y | Disclosure Example |
| 3 | 0.30 | 66.9 | 1.600 | 1.780 | 13.4 | 45 | N | N | Comparative Example |
| 4 | 0.30 | 69.2 | 1.670 | 1.753 | 13.1 | 30.3 | Y | Y | Disclosure Example |
| 5 | 0.30 | 58.3 | 1.630 | 1.832 | 13.5 | 41.2 | N | N | Comparative Example |
| 6 | 0.30 | 71.7 | 1.660 | 1.750 | 13.2 | 23.6 | Y | Y | Disclosure Example |
| 7 | 0.30 | 59.2 | 1.630 | 1.790 | 13.5 | 42.3 | N | N | Comparative Example |
| 8 | 0.30 | 66.7 | 1.670 | 1.760 | 13.2 | 31.3 | Y | Y | Disclosure Example |
| 9 | 0.30 | 62.3 | 1.650 | 1.730 | 13.1 | 29.6 | Y | Y | Disclosure Example |
| 10 | 0.30 | 59.7 | 1.650 | 1.730 | 13.0 | 28.5 | Y | Y | Disclosure Example |
| 11 | 0.30 | 62.5 | 1.660 | 1.750 | 13.0 | 29.8 | Y | Y | Disclosure Example |
| 12 | 0.30 | 71.1 | 1.640 | 1.740 | 12.9 | 28.2 | Y | Y | Disclosure Example |
| 13 | 0.30 | 70.8 | 1.650 | 1.740 | 12.9 | 32.3 | Y | Y | Disclosure Example |
| 14 | 0.30 | 72.6 | 1.660 | 1.740 | 12.9 | 30.5 | Y | Y | Disclosure Example |
| 15 | 0.30 | 73.1 | 1.650 | 1.780 | 13.2 | 29.8 | Y | Y | Disclosure Example |
| 16 | 0.30 | 70.3 | 1.650 | 1.740 | 13.0 | 43 | N | Y | Comparative Example |
| 17 | 0.30 | 67.2 | 1.660 | 1.760 | 13.1 | 30.8 | Y | Y | Disclosure Example |
| 18 | 0.30 | 71.3 | 1.650 | 1.756 | 12.8 | 29.5 | Y | Y | Disclosure Example |
| 19 | 0.30 | 82 | 1.670 | 1.782 | 12.6 | 28.5 | Y | Y | Disclosure Example |
| 20 | 0.30 | 56.3 | 1.620 | 1.723 | 13.4 | 34.2 | Y | Y | Disclosure Example |

[Table 3-2-1]

| No. | Texture after intermediate annealing | Texture after skin pass rolling | | | {411}<011> ratio | Texture after finishing annealing | | | |
|---|---|---|---|---|---|---|---|---|---|
| | α-Fiber ratio A_aα | α-Fiber ratio A_sα | ODF intensity in {100}<011> | Gs | | {411}<uvw> ODF max φ1 | {hkl}<011> ODF max Φ | A411-011/A411-148 | A411-011/A100-011 |
| | [%] | [%] | [-] | [-] | [%] | [°] | [°] | [-] | [-] |
| 21 | 32.0 | 32.1 | 8.8 | 1.3 | 12.3 | 0 | 20 | 1.1 | 1.5 |
| 22 | 31.8 | 32.5 | 8.9 | 1.4 | 21.3 | 0 | 20 | 1.3 | 2.1 |
| 23 | 30.9 | 32.9 | 9.2 | 1.5 | 32.5 | 0 | 20 | 1.7 | 3.3 |
| 24 | 32.1 | 33.5 | 9.5 | 1.4 | 8.9 | 0 | 20 | 0.8 | 1.9 |
| 25 | 32.1 | 33.0 | 9.3 | 1.5 | 22.3 | 0 | 20 | 1.4 | 2.8 |
| 26 | 32.1 | 28.9 | 8.7 | 1.6 | 31.5 | 0 | 20 | 1.5 | 3.4 |
| 27 | 32.5 | 28.9 | 7.8 | 1.4 | 13.8 | 20 | 0 | 0.9 | 0.9 |
| 28 | 33.0 | 34.0 | 9.2 | 1.5 | 25.1 | 0 | 20 | 1.5 | 2.9 |
| 29 | 30.5 | 32.6 | 7.9 | 1.3 | 27.2 | 0 | 20 | 1.6 | 3.0 |
| 30 | 29.5 | 29.8 | 8.3 | 1.7 | 13.3 | 20 | 0 | 1.1 | 1.5 |
| 31 | 31.2 | 31.2 | 8.5 | 0.2 | 11.2 | 20 | 55 | 1.3 | 2.1 |
| 32 | 31.2 | 32.2 | 8.5 | 0.9 | 27.5 | 0 | 20 | 1.6 | 2.9 |
| 33 | 29.8 | 30.4 | 6.7 | 3.2 | 30.2 | 0 | 55 | 1.5 | 3.9 |
| 34 | 28.9 | 29.9 | 7.1 | 1.7 | 12.3 | 0 | 20 | 1.1 | 1.8 |
| 35 | 30.1 | 31.1 | 6.9 | 1.6 | 9.9 | 0 | 20 | 1.0 | 1.7 |
| 36 | 29.3 | 33.4 | 6.6 | 1.6 | 12.6 | 20 | 0 | 1.8 | 3.9 |
| 37 | 28.9 | 30.2 | 7.6 | 1.5 | 15.2 | 0 | 20 | 1.2 | 2.1 |
| 38 | 21.5 | 22.3 | 5.9 | 1.8 | 18.3 | 10 | 20 | 1.2 | 7.2 |
| 39 | 33.2 | 35.3 | 14.8 | 2.8 | 26.5 | 0 | 5 | 1.6 | 2.1 |
| 40 | 31.8 | 33.2 | 6.3 | 1.6 | 19.6 | 0 | 34 | 1.5 | 7.8 |
| 41 | 29.8 | 30.3 | 7.2 | 1.2 | 18.7 | 0 | 30 | 1.5 | 8.0 |
| 42 | 23.5 | 25.2 | 3.8 | 1.5 | 15.9 | 8 | 20 | 1 | 2.3 |

| No. | Texture after intermediate annealing | Texture after skin pass rolling | | | Texture after finishing annealing | | | | |
|---|---|---|---|---|---|---|---|---|---|
| | $\alpha$-Fiber ratio $A_{a\alpha}$ | $\alpha$-Fiber ratio $A_{s\alpha}$ | ODF intensity in {100}<011> | Gs | {411}<011> ratio | {411}<uvw> ODF max $\varphi1$ | {hkl}<011> ODF max $\Phi$ | A411-011/A411-148 | A411-011/A100-011 |
| 43 | 16.2 | 20.1 | 4.8 | 2.5 | 17.8 | 0 | 20 | 1.7 | 2.1 |
| 44 | 13.8 | 15.2 | 1.8 | 1.6 | 14.3 | 0 | 20 | 1.3 | 1.9 |
| 45 | 18.2 | 20.5 | 2.3 | 1.7 | 17.3 | 10 | 20 | 1.5 | 3.1 |
| 46 | 17.6 | 18.9 | 4.0 | 3.1 | 13.6 | 0 | 45 | 1.1 | 6.9 |
| 47 | 22.5 | 23.5 | 14.8 | 1.2 | 15.9 | 0 | 10 | 1.5 | 2 |
| 48 | 35.3 | 37.3 | 16.5 | 1.2 | 8.2 | 0 | 0 | 1.7 | 0.8 |
| 49 | 32.5 | 34.2 | 5.3 | 0.8 | 23 | 0 | 20 | 1.3 | 3.1 |
| 50 | 30.5 | 32.3 | 4.9 | 2.9 | 27.6 | 0 | 30 | 1.3 | 2.7 |
| 51 | Hot rolling cancelled due to overloading | | | | | | | | |
| 52 | 29.8 | 32.3 | 5.1 | 1.6 | 11.3 | 0 | 40 | 1.1 | 1.6 |
| 53 | 31.3 | 33.3 | 4.7 | 1.5 | 30.5 | 0 | 20 | 1.5 | 3.2 |
| 54 | 16.2 | 16.7 | 2.8 | 1.6 | 14 | 0 | 20 | 1.2 | 1.8 |

[Table 3-2-2]

| No. | Sheet thickness | Micro structure | Magnetic characteristics | | | | Hot brittleness | Cost | Evaluation |
|---|---|---|---|---|---|---|---|---|---|
| | | Average crystal grain size | B50 (whole periphery) | B50 (45°) | W10/400 (45°) | Deterioration ratio of iron loss $W_x$ | | | |
| | [mm] | [μm] | [T] | [T] | [ W/kg] | [%] | | | |
| 21 | 0.30 | 65.3 | 1.580 | 1.600 | 13.3 | 43.4 | Y | Y | Comparative Example |
| 22 | 0.30 | 66.9 | 1.620 | 1.720 | 13.4 | 37.2 | Y | Y | Disclosure Example |
| 23 | 0.30 | 67.2 | 1.670 | 1.730 | 13.2 | 30.9 | Y | Y | Disclosure Example |
| 24 | 0.30 | 67.5 | 1.570 | 1.650 | 13.5 | 41.2 | Y | Y | Comparative Example |
| 25 | 0.30 | 68.3 | 1.620 | 1.740 | 13.3 | 34.5 | Y | Y | Disclosure Example |
| 26 | 0.30 | 71.2 | 1.650 | 1.730 | 12.8 | 30.8 | Y | Y | Disclosure Example |
| 27 | 0.30 | 60.3 | 1.550 | 1.690 | 13.5 | 53.6 | Y | Y | Comparative Example |
| 28 | 0.30 | 63.2 | 1.630 | 1.733 | 13.0 | 31.5 | Y | Y | Disclosure Example |
| 29 | 0.30 | 68.5 | 1.650 | 1.710 | 13.1 | 34.3 | Y | Y | Disclosure Example |
| 30 | 0.30 | 59.7 | 1.560 | 1.590 | 13.5 | 45.2 | Y | Y | Comparative Example |
| 31 | 0.30 | 40.2 | 1.570 | 1.630 | 14.5 | 37.9 | Y | Y | Comparative Example |
| 32 | 0.30 | 66.5 | 1.640 | 1.740 | 12.6 | 33.3 | Y | Y | Disclosure Example |
| 33 | 0.30 | 48.2 | 1.550 | 1.590 | 13.9 | 28.8 | Y | Y | Comparative Example |
| 34 | 0.30 | 59.8 | 1.580 | 1.690 | 13.6 | 41.5 | Y | Y | Comparative Example |
| 35 | 0.30 | 62.5 | 1.570 | 1.720 | 13.6 | 40.3 | Y | Y | Comparative Example |
| 36 | 0.30 | 65.2 | 1.580 | 1.720 | 13.5 | 29.9 | Y | Y | Comparative Example |
| 37 | 0.30 | 58.6 | 1.620 | 1.720 | 13.6 | 23.5 | Y | Y | Disclosure Example |
| 38 | 0.30 | 63.5 | 1.618 | 1.721 | 13.2 | 35.3 | Y | Y | Disclosure Example |
| 39 | 0.30 | 60.5 | 1.618 | 1.750 | 13.5 | 28.9 | Y | Y | Disclosure Example |
| 40 | 0.30 | 130 | 1.623 | 1.723 | 13.7 | 36.5 | Y | Y | Disclosure Example |

(continued)

| No. | Sheet thickness | Micro structure | Magnetic characteristics | | | | Hot brittleness | Cost | Evaluation |
|---|---|---|---|---|---|---|---|---|---|
| | | Average crystal grain size | B50 (whole periphery) | B50 (45°) | W10/400 (45°) | Deterioration ratio of iron loss $W_x$ | | | |
| | [mm] | [μm] | [T] | [T] | [ W/kg] | [%] | | | |
| 41 | 0.30 | 149 | 1.620 | 1.721 | 13.8 | 37.6 | Y | Y | Disclosure Example |
| 42 | 0.50 | 60.3 | 1.632 | 1.715 | 13.4 | 28.5 | Y | Y | Disclosure Example |
| 43 | 0.30 | 59.3 | 1.618 | 1.703 | 13.5 | 30.8 | Y | Y | Disclosure Example |
| 44 | 0.30 | 68.3 | 1.621 | <u>1.673</u> | 13.3 | 32.3 | Y | Y | Comparative Example |
| 45 | 0.30 | 72.5 | 1.618 | 1.703 | 13.1 | 33.6 | Y | Y | Disclosure Example |
| <u>46</u> | 0.30 | 69 | 1.653 | <u>1.663</u> | 13.3 | 38.2 | Y | Y | Comparative Example |
| 47 | 0.20 | 65 | 1.625 | 1.703 | 12.6 | 28.6 | Y | Y | Disclosure Example |
| <u>48</u> | 0.18 | 67 | <u>1.613</u> | <u>1.692</u> | 12.8 | 39.5 | Y | Y | Comparative Example |
| 49 | 0.30 | 65 | 1.623 | 1.719 | 13.4 | 33.3 | Y | Y | Disclosure Example |
| 50 | 0.30 | 62 | 1.621 | 1.703 | 13.5 | 29.8 | Y | Y | Disclosure Example |
| <u>51</u> | Hot rolling cancelled due to overloading | | | | | | | | Comparative Example |
| <u>52</u> | 0.30 | 31.3 | <u>159</u> | <u>1.62</u> | <u>16.8</u> | 45.3 | Y | Y | Comparative Example |
| <u>53</u> | 0.30 | <u>38.3</u> | 1.642 | 1.743 | <u>14.8</u> | 30 | Y | Y | Comparative Example |
| <u>54</u> | 0.30 | 65.2 | 1.62 | <u>1.64</u> | 13.4 | 32.5 | Y | Y | Comparative Example |

Each underline in Table 1 to Table 3 indicates any condition out of the scope of the disclosure.

It can be seen that Disclosure Examples exhibit favorable values of all the magnetic flux density B50 (whole periphery), the magnetic flux density B50 (45°), and the iron loss W10/400 (45°), and cause small stress sensitivity. It can also be seen that Disclosure Examples are not problematic in terms of hot brittleness and alloy cost.

The disclosure of Japanese Patent Application No. 2023-001934 is herein incorporated by reference in its entirety.

All literature, patent applications, and technical standards described herein are herein incorporated by reference, as if each individual literature, patent application, and technical standard were specifically and individually indicated to be incorporated by reference.

## Claims

1.  A non-oriented electromagnetic steel sheet, comprising: in percentage by mass, C: 0.0100% or less; Si: from 1.50% to 4.00%; sol.Al: from 0.0001% to 1.00%; S: 0.0100% or less; N: 0.0100% or less; one or more selected from the group consisting of Mn, Ni, and Cu: less than 2.5% in total; Mo: from 0% to less than 2.5%; Cr: from 0% to less than 2.5%; Ti: from 0% to 0.005%; Nb: from 0% to 0.005%; Sn: from 0% to 0.40%; Sb: from 0% to 0.40%; P: from 0% to 0.400%; and one or more selected from the group consisting of Mg, Ca, Sr, Ba, Ce, La, Nd, Pr, Zn and Cd: from 0% to 0.010% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities,

A411-011 is 15.0% or more and the non-oriented electromagnetic steel sheet has a maximum intensity at $\varphi 1 =$ from 0 to 10° when $\varphi 1 =$ from 0 to 90° and $\Phi = 20°$ and has a maximum intensity at $\Phi =$ from 5 to 35° when $\varphi 1 = 0°$ and $\Phi =$ from 0 to 90°, in an ODF at $\varphi 2 = 45°$, in a case in which an area ratio of a crystal grain of an {hkl}<uvw> orientation, with respect to a total field of view, in a measurement of a plane in parallel with a rolling plane at a depth of 1/2 of a sheet thickness from a steel sheet surface with SEM-EBSD, is designated as Ahkl-uvw, and an average crystal grain size is from 50 $\mu$m to 150 $\mu$m:

$Ar_3$ (°C) = 1020 - 325 × [C] + 33 × [Si] + 287 × [P] + 80 × [sol.Al] - 120 × ([Mn] + [Mo] + [Cu]) - 46 × ([Cr] + [Ni]) ... (1).  (1).

2. The non-oriented electromagnetic steel sheet according to claim 1, wherein an area ratio of a crystal grain of a specified orientation, with respect to a total field of view, in the measurement of the plane in parallel with a rolling plane at a depth of 1/2 of a sheet thickness from the steel sheet surface with the SEM-EBSD, satisfies both of the following Formula (2) and Formula (3):

$$A411\text{-}011/A411\text{-}148 \geq 1.1 \ldots (2)$$

$$A411\text{-}011/A100\text{-}011 \geq 2.0 \ldots (3).$$

3. The non-oriented electromagnetic steel sheet according to claim 1, comprising a total of less than 2.50% of one kind or a plurality of kinds selected from Mn, Ni, Co, Pt, Pb, Au, or Cu.

4. An original sheet of a non-oriented electromagnetic steel sheet comprising: in percentage by mass, C: 0.0100% or less; Si: from 1.50% to 4.00%; sol.Al: from 0.0001% to 1.00%; S: 0.0100% or less; N: 0.0100% or less; one or more selected from the group consisting of Mn, Ni, and Cu: less than 2.5% in total; Mo: from 0% to less than 2.5%; Cr: from 0% to less than 2.5%; Ti: from 0% to 0.005%; Nb: from 0% to 0.005%; Sn: from 0% to 0.40%; Sb: from 0% to 0.40%; P: from 0% to 0.400%; and one or more selected from the group consisting of Mg, Ca, Sr, Ba, Ce, La, Nd, Pr, Zn and Cd: from 0% to 0.010% in total, wherein:

the original sheet of the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities,

an area ratio $A_{s\alpha}$ of a crystal grain of a crystal orientation of $\alpha$-fiber, with respect to a total field of view, in a measurement of a plane in parallel with a rolling plane at a depth of 1/2 of a sheet thickness from a steel sheet surface with SEM-EBSD, is 20.0% or more,

an ODF intensity on a {100}<011> orientation in creation of an ODF by measurement with the SEM-EBSD is 15.0 or less, and

in a case in which a number average value of GOS with respect to a total field of view in the measurement with SEM-EBSD is defined as Gs, the Gs is from 0.8 to 3.0:

$Ar_3$ (°C) = 1020 - 325 × [C] + 33 × [Si] + 287 × [P] + 80 × [sol.Al] - 120 × ([Mn] + [Mo] + [Cu]) - 46 × ([Cr] + [Ni])  (1).

**5.** A core, comprising the non-oriented electromagnetic steel sheet according to any one of claims 1 to 3.

**6.** A core, comprising the original sheet of a non-oriented electromagnetic steel sheet according to claim 4.

**7.** A cold-rolled steel sheet to be used for production of the non-oriented electromagnetic steel sheet according to any one of claims 1 to 3 or the original sheet of a non-oriented electromagnetic steel sheet according to claim 4, the cold-rolled steel sheet comprising:
in percentage by mass, C: 0.0100% or less; Si: from 1.50% to 4.00%; sol.Al: from 0.0001% to 1.00%; S: 0.0100% or less; N: 0.0100% or less; one or more selected from the group consisting of Mn, Ni, and Cu: less than 2.5% in total; Mo: from 0% to less than 2.5%; Cr: from 0% to less than 2.5%; Ti: from 0% to 0.005%; Nb: from 0% to 0.005%; Sn: from 0% to 0.40%; Sb: from 0% to 0.40%; P: from 0% to 0.400%; and one or more selected from the group consisting of Mg, Ca, Sr, Ba, Ce, La, Nd, Pr, Zn and Cd: from 0% to 0.010% in total, wherein:

the cold-rolled steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities, and an area ratio $A_{a\alpha}$ of a crystal grain of a crystal orientation of $\alpha$-fiber, with respect to a total field of view, in a measurement of a plane in parallel with a rolling plane at a depth of 1/2 of a sheet thickness from a steel sheet surface with SEM-EBSD, is 15.0% or more:

$$Ar_3 (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1).$$

(1).

**8.** A method of producing a non-oriented electromagnetic steel sheet, the method comprising:

a hot rolling step of performing hot rolling of a steel material containing, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein the steel material has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities, to obtain a hot-rolled steel sheet;
a cooling step of cooling the hot-rolled steel sheet after the hot rolling step;
a cold rolling step of cold rolling the hot-rolled steel sheet after the cooling step, to obtain a cold-rolled steel sheet;
an intermediate annealing step of subjecting the cold-rolled steel sheet to intermediate annealing;
a skin pass rolling step of subjecting the cold-rolled steel sheet after the intermediate annealing step, to skin pass rolling, to obtain an original sheet of a non-oriented electromagnetic steel sheet; and
a finishing annealing step of subjecting the original sheet of the non-oriented electromagnetic steel sheet after the skin pass rolling step, to finishing annealing, wherein:

rolling is performed in the hot rolling step such that a rolling initiation temperature is more than the $Ar_3$ temperature + 20°C, a rolling completion temperature is less than the $Ar_3$ temperature, a rolling reduction in a period taken until first passing through the $Ar_3$ temperature backward from the point of time of completion of rolling is 15% or more, and a rolling reduction in a period taken until first passing through the $Ar_3$ temperature + 20°C backward from a point of time of first passing through the $Ar_3$ temperature is 10% or more,
cooling is initiated after a lapse of 0.10 seconds or more from a final pass of finishing rolling, to from 300°C to the $Ar_3$ temperature - 20°C after 3 seconds, in the cooling step,
a rolling reduction in the skin pass rolling step is set to from 5 to 20%, and
an annealing temperature is set to from 750°C to 900°C and an annealing time is set to 2 hours or more in the finishing annealing step:

$$\text{Ar}_3 \ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1). \tag{1}$$

9. A method of producing an original sheet of a non-oriented electromagnetic steel sheet, the method comprising:

a hot rolling step of performing hot rolling of a steel material containing, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein the steel material has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $\text{Ar}_3$ (°C) defined by the following Formula (1) is from 750 to 1050°C and the balance consists of Fe and impurities, to obtain a hot-rolled steel sheet;
a cooling step of cooling the hot-rolled steel sheet after the hot rolling step;
a cold rolling step of cold rolling the hot-rolled steel sheet after the cooling step, to obtain a cold-rolled steel sheet;
an intermediate annealing step of subjecting the cold-rolled steel sheet to intermediate annealing; and
a skin pass rolling step of subjecting the cold-rolled steel sheet after the intermediate annealing step, to skin pass rolling, to obtain an original sheet of a non-oriented electromagnetic steel sheet, wherein:

rolling is performed in the hot rolling step such that a rolling initiation temperature is more than the $\text{Ar}_3$ temperature + 20°C, a rolling completion temperature is less than the $\text{Ar}_3$ temperature, a rolling reduction in a period taken until first passing through the $\text{Ar}_3$ temperature backward from the point of time of completion of rolling is 15% or more, and a rolling reduction in a period taken until first passing through the $\text{Ar}_3$ temperature + 20°C backward from a point of time of first passing through the $\text{Ar}_3$ temperature is 10% or more,
cooling is initiated after a lapse of 0.10 seconds or more from a final pass of finishing rolling, to from 300°C to the $\text{Ar}_3$ temperature - 20°C after 3 seconds, in the cooling step, and
a rolling reduction in the skin pass rolling step is from 5 to 20%:

$$\text{Ar}_3 \ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1). \tag{1}$$

10. The method of producing a non-oriented electromagnetic steel sheet according to claim 8 or the method of producing an original sheet of a non-oriented electromagnetic steel sheet according to claim 9, wherein the cooling step is performed such that an average crystal grain size of the hot-rolled steel sheet after the cooling step is from 3 to 10 $\mu$m.

11. The method of producing a non-oriented electromagnetic steel sheet according to claim 8 or the method of producing an original sheet of a non-oriented electromagnetic steel sheet according to claim 9, wherein a rolling reduction in the cold rolling step is set to from 75 to 95%.

12. The method of producing a non-oriented electromagnetic steel sheet according to claim 8 or the method of producing an original sheet of a non-oriented electromagnetic steel sheet according to claim 9, wherein an annealing temperature is set to 900°C or less in the intermediate annealing step.

13. A method of producing a cold-rolled steel sheet, the method comprising:

a hot rolling step of performing hot rolling of a steel material containing, in percentage by mass, C: 0.0100% or less, Si: from 1.50% to 4.00%, sol.Al: from 0.0001% to 1.00%, S: 0.0100% or less, N: 0.0100% or less, one or more selected from the group consisting of Mn, Ni, and Cu: less than 2.5% in total, Mo: from 0% to less than 2.5%, Cr: from 0% to less than 2.5%, Ti: from 0% to 0.005%, Nb: from 0% to 0.005%, Sn: from 0% to 0.40%, Sb: from 0% to 0.40%, P: from 0% to 0.400%, and one or more selected from the group consisting of Mg, Ca, Sr, Ba, Ce, La, Nd, Pr, Zn and Cd: from 0% to 0.010% in total, wherein the steel material has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature Ar$_3$ (°C) defined by the following Formula (1) is from 750 to 1050°C and the balance consists of Fe and impurities, to obtain a hot-rolled steel sheet;

a cooling step of cooling the hot-rolled steel sheet after the hot rolling step;

a cold rolling step of cold rolling the hot-rolled steel sheet after the cooling step, to obtain a cold-rolled steel sheet; and

an intermediate annealing step of subjecting the cold-rolled steel sheet to intermediate annealing, wherein:

rolling is performed in the hot rolling step such that a rolling initiation temperature is more than the Ar$_3$ temperature + 20°C, a rolling completion temperature is less than the Ar$_3$ temperature, a rolling reduction in a period taken until first passing through the Ar$_3$ temperature backward from the point of time of completion of rolling is 15% or more, and a rolling reduction in a period taken until first passing through the Ar$_3$ temperature + 20°C backward from a point of time of first passing through the Ar$_3$ temperature is 10% or more, and cooling is initiated after a lapse of 0.10 seconds or more from a final pass of finishing rolling, to from 300°C to the Ar$_3$ temperature - 20°C after 3 seconds, in the cooling step:

$$Ar_3 \ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \ ... \ (1). \tag{1}$$

14. The method of producing a cold-rolled steel sheet according to claim 13, wherein the cooling step is performed such that an average crystal grain size of the hot-rolled steel sheet after the cooling step is from 3 to 10 μm.

15. The method of producing a cold-rolled steel sheet according to claim 13 or 14, wherein a rolling reduction in the cold rolling step is from 75 to 95%.

16. The method of producing a cold-rolled steel sheet according to claim 13 or 14, wherein an annealing temperature is 900°C or less in the intermediate annealing step.

## INTERNATIONAL SEARCH REPORT

| International application No. |
|---|
| **PCT/JP2024/000132** |

| A. | CLASSIFICATION OF SUBJECT MATTER |
|---|---|

*C22C 38/00*(2006.01)i; *C21D 8/12*(2006.01)i; *C22C 38/60*(2006.01)i; *H01F 1/147*(2006.01)i; *H01F 27/245*(2006.01)i
FI: C22C38/00 303U; C22C38/60; C21D8/12 A; H01F1/147 175; H01F27/245

According to International Patent Classification (IPC) or to both national classification and IPC

| B. | FIELDS SEARCHED |
|---|---|

Minimum documentation searched (classification system followed by classification symbols)

C22C38/00-C22C38/60; H01F1/147; H01F27/245; C21D8/12; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-139198 A (NIPPON STEEL CORPORATION) 03 September 2020 (2020-09-03) claims, paragraphs [0001]-[0016], [0061], [0073], [0089], examples 1A, 1B, 1C, 2 | 1-3, 5 |
| Y | | 1-3, 5 |
| A | | 4, 6-16 |
| Y | JP 2021-134383 A (NIPPON STEEL CORPORATION) 13 September 2021 (2021-09-13) claims, paragraphs [0035], [0066], [0078], examples A2, B1, C1, D1, E1 | 1-3, 5 |
| A | | 4, 6-16 |
| A | JP 2006-219692 A (NIPPON STEEL CORP.) 24 August 2006 (2006-08-24) claims, paragraphs [0001]-[0011], [0044] | 1-16 |
| A | WO 2020/153387 A1 (JFE STEEL CORPORATION) 30 July 2020 (2020-07-30) entire text, all drawings | 1-16 |
| A | WO 2022/196805 A1 (NIPPON STEEL CORPORATION) 22 September 2022 (2022-09-22) entire text | 1-16 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/000132**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021/205880 A1 (NIPPON STEEL CORPORATION) 14 October 2021 (2021-10-14) entire text | 1-16 |
| A | JP 6-220537 A (KAWASAKI STEEL CORP.) 09 August 1994 (1994-08-09) entire text, all drawings | 1-16 |
| P, A | KR 10-2023-0094459 A (POSCO) 28 June 2023 (2023-06-28) entire text | 1-16 |

Form PCT/ISA/210 (second sheet) (July 2022)

# EP 4 650 474 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2020-139198 | A | 03 September 2020 | (Family: none) | | | |
| JP | 2021-134383 | A | 13 September 2021 | (Family: none) | | | |
| JP | 2006-219692 | A | 24 August 2006 | (Family: none) | | | |
| WO | 2020/153387 | A1 | 30 July 2020 | US | 2022/0064751 | A1 | |
| | | | | entire text, all drawings | | | |
| | | | | EP | 3916113 | A1 | |
| | | | | TW | 202028480 | A | |
| | | | | KR | 10-2021-0099111 | A | |
| | | | | CN | 113366124 | A | |
| | | | | CA | 3127170 | A1 | |
| | | | | MX | 2021008802 | A | |
| | | | | RU | 2771133 | C1 | |
| WO | 2022/196805 | A1 | 22 September 2022 | EP | 4310202 | A1 | |
| | | | | entire text | | | |
| | | | | TW | 202248432 | A | |
| | | | | CN | 117098865 | A | |
| | | | | KR | 10-2023-0145142 | A | |
| | | | | BR | 112023018538 | A2 | |
| WO | 2021/205880 | A1 | 14 October 2021 | US | 2023/0106818 | A1 | |
| | | | | entire text | | | |
| | | | | EP | 4134456 | A1 | |
| | | | | TW | 202138582 | A | |
| | | | | CN | 115315536 | A | |
| | | | | KR | 10-2022-0142512 | A | |
| | | | | BR | 112022018384 | A2 | |
| JP | 6-220537 | A | 09 August 1994 | (Family: none) | | | |
| KR | 10-2023-0094459 | A | 28 June 2023 | WO | 2023/121200 | A1 | |
| | | | | entire text | | | |

Form PCT/ISA/210 (patent family annex) (July 2022)

**EP 4 650 474 A1**

**REFERENCES CITED IN THE DESCRIPTION**

**Patent documents cited in the description**

- JP 2017145462 A
- JP 2017193731 A
- JP 2019178380 A
- JP 4218077 B
- JP 5256916 B
- JP 2011111658 A
- JP 2019183185 A

- JP 4029430 B
- JP 6319465 B
- WO 2021095846 A
- JP 2021080501 A
- JP 2020100860 A
- WO 2021205880 A
- JP 2023001934 A